(19) Europäisches Patentamt / European Patent Office / Office européen des brevets

(11) **EP 3 462 795 B1**

## (12) EUROPEAN PATENT SPECIFICATION

(45) Date of publication and mention of the grant of the patent:
**20.03.2024   Bulletin 2024/12**

(21) Application number: **18198168.9**

(22) Date of filing: **02.10.2018**

(51) International Patent Classification (IPC):
**H04W 72/04** (2023.01)   **H04L 5/00** (2006.01)
**H04B 1/7143** (2011.01)

(52) Cooperative Patent Classification (CPC):
**H04B 1/7143; H04L 5/0012; H04L 5/0094;**
H04L 5/003; H04L 5/0051

(54) **MOBILE COMMUNICATION SYSTEM, USER EQUIPMENT, ACCESS NODE, TRANSCEIVER, BASEBAND CIRCUITRY, APPARATUS, METHOD, AND MACHINE READABLE MEDIA AND COMPUTER PROGRAMS FOR PROCESSING BASEBAND SIGNALS**

MOBILKOMMUNIKATIONSSYSTEM, BENUTZERAUSRÜSTUNG, ZUGANGSKNOTEN, SENDER-EMPFÄNGER, BASISBANDSCHALTUNG, VORRICHTUNG, VERFAHREN UND MASCHINENLESBARE MEDIEN UND COMPUTERPROGRAMME ZUR VERARBEITUNG VON BASISBANDSIGNALEN

SYSTÈME DE COMMUNICATION MOBILE, ÉQUIPEMENT UTILISATEUR, NOEUD D'ACCÈS, ÉMETTEUR-RÉCEPTEUR, CIRCUITERIE DE BANDE DE BASE, APPAREIL, PROCÉDÉ ET SUPPORTS LISIBLES PAR MACHINE ET PROGRAMMES INFORMATIQUES POUR TRAITER DES SIGNAUX DE BANDE DE BASE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.10.2017   US 201762567165 P**
**17.11.2017   US 201762587705 P**
**06.04.2018   US 201862654099 P**

(43) Date of publication of application:
**03.04.2019   Bulletin 2019/14**

(73) Proprietor: **Apple Inc.**
**Cupertino, CA 95014 (US)**

(72) Inventors:
• **CHATTERJEE, Debdeep**
**San Jose**
**California 95128 (US)**
• **PANTELEEV, Sergey**
**603065 Nizhny Novgorod (RU)**
• **XIONG, Gang**
**Portland**
**Oregon 97229 (US)**
• **CHO, Joonyoung**
**Portland**
**Oregon 97229 (US)**

(74) Representative: **Barton, Russell Glen**
**Withers & Rogers LLP**
**2 London Bridge**
**London SE1 9RA (GB)**

(56) References cited:
• **NTT DOCOMO ET AL: "Frequency-domain resource allocation", 3GPP DRAFT; R1-1713948, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, Czechia; 20170821 - 20170825 20 August 2017 (2017-08-20), XP051316740, Retrieved from the Internet: URL:http://www.3gpp.org/ftp/Meetings_3GPP_ SYNC/RAN1/Docs/ [retrieved on 2017-08-20]**
• **NTT DOCOMO ET AL: "Summary of open issues for AI 7.3.3.4", 3GPP DRAFT; R1-1718815, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, Czech Republic; 20171009 - 20171013 9 October 2017 (2017-10-09), XP051341971, Retrieved from the Internet: URL:http://www.3gpp.org/ftp/Meetings_3GPP_ SYNC/RAN1/Docs/ [retrieved on 2017-10-09]**

**(Cont. next page)**

- **NTT DOCOMO ET AL: "DL/UL resource allocation", 3GPP DRAFT; R1-1720821, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, USA; 20171127 - 20171201 18 November 2017 (2017-11-18), XP051370250, Retrieved from the Internet: URL:http://www.3gpp.org/ftp/tsg%5Fran/WG1%5FRL1/TSGR1%5F91/Docs/ [retrieved on 2017-11-18]**

**Description**

**Field**

Examples relate to a concept for a mobile communication system, user equipment, an access node, a transceiver, baseband circuitry, an apparatus, a method, machine readable media and a computer program for processing baseband signals, and particularly but not exclusively to a concept for configuring frequency hopping in a mobile communication system.

**Background**

Mobile communication has evolved significantly from early voice systems to today's highly sophisticated integrated communication platform. The next generation wireless communication system, 5G, or new radio (NR) may provide access to information and sharing of data anywhere, anytime by various users and applications. NR is expected to be a unified network/system that targets to meet vastly different and sometimes conflicting performance dimensions and services. Such diverse multi-dimensional requirements are driven by different services and applications. In general, NR will evolve based on 3GPP LTE-Advanced (Long Term Evolution) with additional potential new Radio Access Technologies (RATs) to enrich people's lives with better, simple and seamless wireless connectivity solutions. NR may enable everything connected by wireless and deliver fast, rich contents and services.

Document R1-1713948 is a 3GPP meeting contribution on NR frequency-domain resource allocation.

**Brief description of the Figures**

Some examples of apparatuses, methods and/or computer programs will be described in the following by way of example only, and with reference to the accompanying figures, in which

Fig. 1 shows an example of an apparatus or baseband circuitry configured to process baseband signals and an example of a transceiver;

Fig. 2 illustrates an example of an access node, an example of user equipment, and an example of a mobile communication system;

Fig. 3 shows a block diagram of an example of a method for processing baseband signals;

Fig. 4 illustrates collision in case of frequency hopping with multiple bandwidth parts;

Fig. 5 shows inter/intra-mini-slot frequency hopping boundary within a slot in an example;

Fig. 6 shows an example of a mobile communication system;

Fig. 7 shows another example of a mobile communication system;

Fig. 8 shows an example of infrastructure equipment;

Fig. 9 illustrates an example of a platform or device in accordance with various examples;

Fig. 10 illustrates example components of baseband circuitry and radio front end modules in accordance with some examples;

Fig. 11 illustrates example interfaces of baseband circuitry in accordance with some examples;

Fig. 12 is an illustration of a control plane protocol stack in accordance with some examples;

Fig. 13 shows an illustration of a user plane protocol stack in accordance with some examples;

Fig. 14 illustrates components of a core network in accordance with some examples;

Fig. 15 is a block diagram illustrating components, according to some examples of a system to support Network Functions Virtualization; and

Fig. 16 is a block diagram illustrating components, according to some examples, able to read instructions from a machine-readable or computer-readable medium (e.g., a non- transitory machine-readable storage medium) and perform any one or more of the methodologies discussed herein.

## Detailed Description

The invention relates to baseband circuitry according to claim 1 and a method for processing baseband signals according to claim 10. Further embodiments are covered by the dependent claims.

Various examples will now be described more fully with reference to the accompanying drawings in which some examples are illustrated. In the figures, the thicknesses of lines, layers and/or regions may be exaggerated for clarity.

The following detailed description refers to the accompanying drawings. The same reference numbers may be used in different drawings to identify the same or similar elements. In the following description, for purposes of explanation and not limitation, specific details are set forth such as particular structures, architectures, interfaces, techniques, etc. in order to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail.

Accordingly, while further examples are capable of various modifications and alternative forms, some particular examples thereof are shown in the figures and will subsequently be described in detail. However, this detailed description does not limit further examples to the particular forms described.

Same or like numbers refer to like or similar elements throughout the description of the figures, which may be implemented identically or in modified form when compared to one another while providing for the same or a similar functionality. Examples/embodiments are based on the finding that current NR design supports uplink shared channel (PUSCH) transmission with both CP-OFDM (Cyclic Prefix Orthogonal Frequency Division Multiplex) and DFT-s-OFDM (Discrete Fourier Transform-spread-OFDM) types of waveforms. LTE uses DFT-s-OFDM for UL transmission. However, it is another finding that in NR there are at least the following aspects different from LTE (Long Term Evolution). The NR scheduling unit is one slot of 14 symbols for normal CP (12 symbols for extended CP) or non-slot, i.e. mini-slot of duration from 1 symbol to (slot length-1) symbols. However, LTE operates by scheduling units of one subframe (1 ms), which consists of two slots of 0.5 ms duration. In LTE, the intra-subframe frequency hopping was organized by hopping between slots. In NR, a new mechanism to split PUSCH duration for hopping may be desirable. NR supports operation with multiple bandwidth parts, BWP, where each user equipment (UE) may have a specific configured operational bandwidth within the carrier bandwidth. It is another finding that when active UEs have different overlapped bandwidth parts, hopping rules with an offset equal to a fraction of operational bandwidth may lead to collisions.

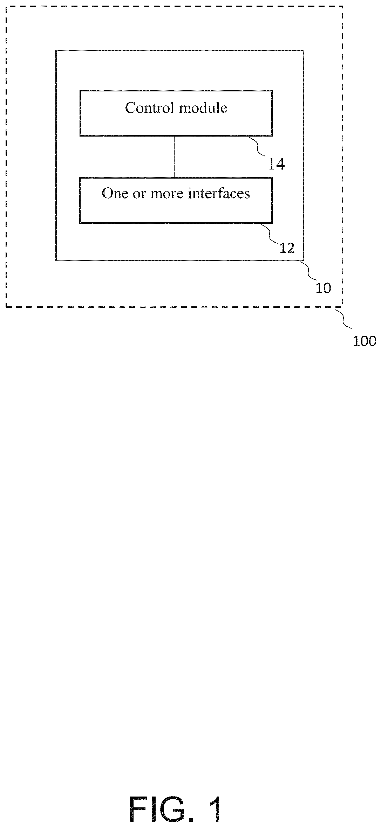

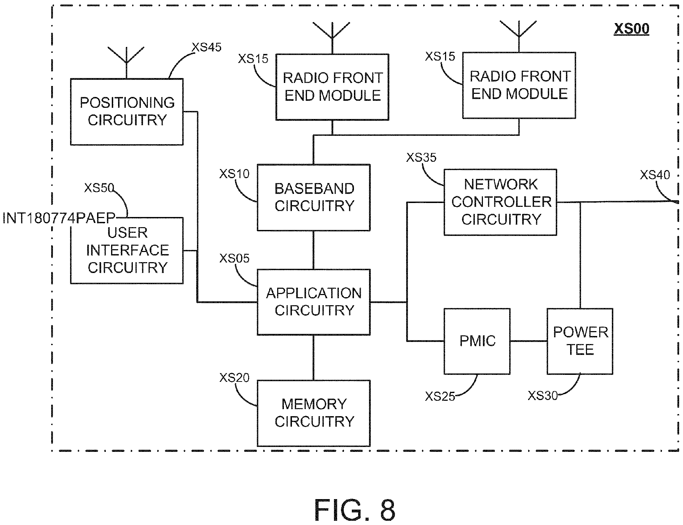

Fig. 1 shows an example of an apparatus 10 or baseband circuitry 10 configured to process baseband signals. Fig. 1 also shows an example of a transceiver 100, which comprises the apparatus 10 or baseband circuitry 10. Further examples of baseband circuitries or apparatuses 10, XS10, XT10, XT04, etc. are also illustrated in the subsequent Figs., e.g. Figs. 8, 9, and 10. The following description of the baseband circuitry equally applies to the apparatus 10. The baseband circuitry 10 is configured to process baseband signals in a transceiver 100 of a mobile communication system. The mobile communication system may be a new radio, NR, system or a 5th, 5G, or a later generation system. The baseband circuitry 10 comprises one or more interfaces 12, which are configured to communicate with radio frequency, RF, circuitry of the transceiver 100. The baseband circuitry 10 further comprises a processor 14, which is coupled to the one or more interfaces 12 and which is configured to control the one or more interfaces 12. The processor 14 is further configured to communicate frequency hopping information using the one or more interfaces 12. The frequency hopping information indicates a frequency hopping configuration of a physical uplink shared channel, PUSCH, wherein the frequency hopping configuration indicates intra-slot or inter-slot PUSCH frequency hopping. In further examples the processor 14 can be configured to determine the frequency hopping configuration based on different system settings or performance parameters. The processor 14 can be further configured to communicate according to the frequency hopping configuration. Depending on whether the baseband circuitry 10 is implemented on a UE side or on base station side, transmission and/or reception can be carried out based on the frequency hopping configuration.

In embodiments or examples the one or more interfaces 12 may correspond to any means for communicating, obtaining, receiving, transmitting or providing analog or digital signals or information, e.g. any connector, contact, pin, register, input port, output port, conductor, lane, etc. which allows providing or obtaining a signal or information. Such information may be communicated in terms of analog or digital signals, e.g. by means of messages, digits or blocks represented by digital or binary sequences. An interface may be wireless or wireline and it may be configured to communicate, i.e. transmit or receive signals, information with further internal or external components. The one or more interfaces 12 may comprise or be coupled to further components, e.g. radio frequency circuitry, to enable according communication in the mobile communication system or environment, such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc. The one or more interfaces 12 may be coupled to one or more antennas, which may correspond to any transmit and/or receive antennas, such as horn antennas, dipole antennas, patch antennas, sector antennas etc. The antennas may be arranged in a defined geometrical setting, such as a uniform array, a linear array, a circular array, a triangular array, a uniform field antenna, a field array, combinations thereof, etc. In some examples the one or more interfaces 12 may serve the purpose of transmitting or receiving or both, transmitting and receiving, information, such as information related to frequency hopping configuration and/or data transmission/reception based on a configured frequency hopping scheme.

As shown in Fig. 1 the respective one or more interfaces 12 are coupled to the respective processor 14 at the apparatus/baseband circuitry 10. In embodiments or examples processor 14 may be any the control module and may be implemented using one or more processing units, one or more processing or controlling devices, any means for processing/controlling, any means for determining, any means for calculating, such as any processor, a computer, a controller or a programmable hardware component being operable with accordingly adapted software. In other words, the described function of the processor 14 may as well be implemented in software, which is then executed on one or more programmable hardware components. Such hardware components may comprise a general purpose processor, a controller, a Digital Signal Processor (DSP), a micro-controller, any hardware capable of executing software instructions. In examples accelerated hardware, e.g. an FPGA (Field Programmable Gate Array), may be used to implement the processor 14.

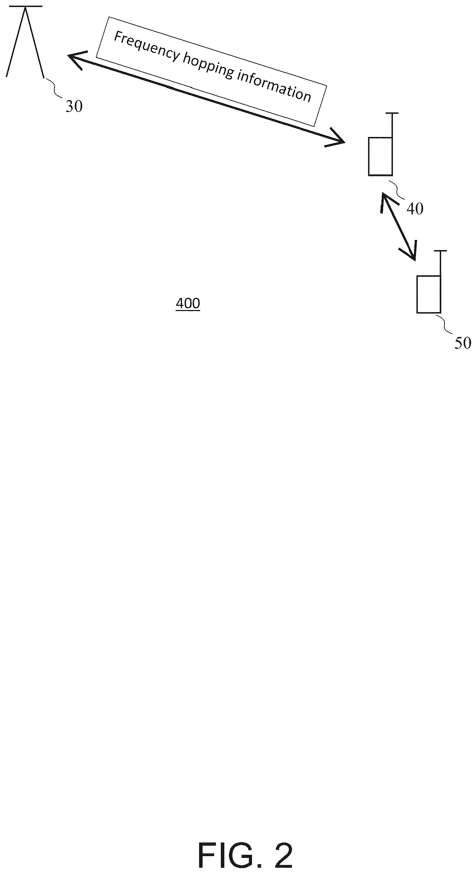

Fig. 2 illustrates an example of an access node 30, which comprises an example of the transceiver 100 of Fig. 1. Fig. 2 further shows two examples of user equipment 40, 50, which comprise examples of the transceiver 100, too. Fig. 2 further shows an example of a mobile communication system 400. The example of the access node 30 may be a NodeB, an eNodeB (enhanced NodeB), a gNode (next generation NodeB), any base station transceiver etc. In examples the mobile communication system or network 400 may comprise any new radio, NR, system or a 5th, 5G, or a later generation Radio Access Technology (RAT).

Examples may also be applied to different Single Carrier or OFDM flavors (CP-OFDM, SC-FDMA, SC-OFDM, DFT-s-OFDM, filter bank-based multicarrier (FBMC), OFDMA) and in particular 3GPP NR (New Radio) by allocating the OFDM carrier data bit vectors to the corresponding symbol resources.

An access node 30, network node, base station or base station transceiver can be operable to communicate with one or more active mobile transceivers or terminals and a base station transceiver can be located in or adjacent to a coverage area of another base station transceiver, e.g. a macro cell base station transceiver or small cell base station transceiver. Hence, examples may provide a mobile communication system comprising one or more mobile transceivers and one or more base station transceivers, wherein the base station transceivers may establish macro cells or small cells, as e.g. pico-, metro-, or femto cells. A mobile transceiver may correspond to any use equipment (UE), a smartphone, a cell phone, a laptop, a notebook, a personal computer, a Personal Digital Assistant (PDA), a Universal Serial Bus (USB) -stick, a car. A mobile transceiver may also be referred to as UE or mobile in line with the 3GPP terminology.

A base station transceiver can be located in the fixed or stationary part of the network or system. A base station transceiver may correspond to a remote radio head, a transmission point, an access point or access node, a macro cell, a small cell, a micro cell, a femto cell, a metro cell. A base station transceiver can be a wireless interface of a wired network, which enables transmission of radio signals to a UE or mobile transceiver.

Further details on the implementation and functional subdivision or breakdown of a mobile communication system 400 will be provided in the sequel.

As further shown in Fig. 2 frequency hopping information may be communicated between the access node 30 and the user equipment 40. For example, the access node 30 may provide frequency hopping information to the UE 40. The UE 40 may be configured to transmit slots or mini -slots with frequency hopping within slots or mini-slots or between slot or mini-slot repetitions. Moreover, in some examples the UE 40 may relay frequency hopping information to other UEs 50. The UE 40 may be configured to receive the frequency hopping information from the access node 30 of the mobile communication system 400, e.g. in terms of configuration information. The UE may then transmit/receive control and/or payload data according to the frequency hopping configuration. Correspondingly, the access node 30 may be configured to provide the frequency hopping information to the UE 40. The access node 30 may be further configured to receive data from the UE 40 using slots or mini -slots with frequency hopping within slots or mini-slots or between slot or mini-slot repetitions. The mobile communication system 400 may comprise one or more pieces of user equipment 40 as described herein and one or more access nodes 30 according to the description herein.

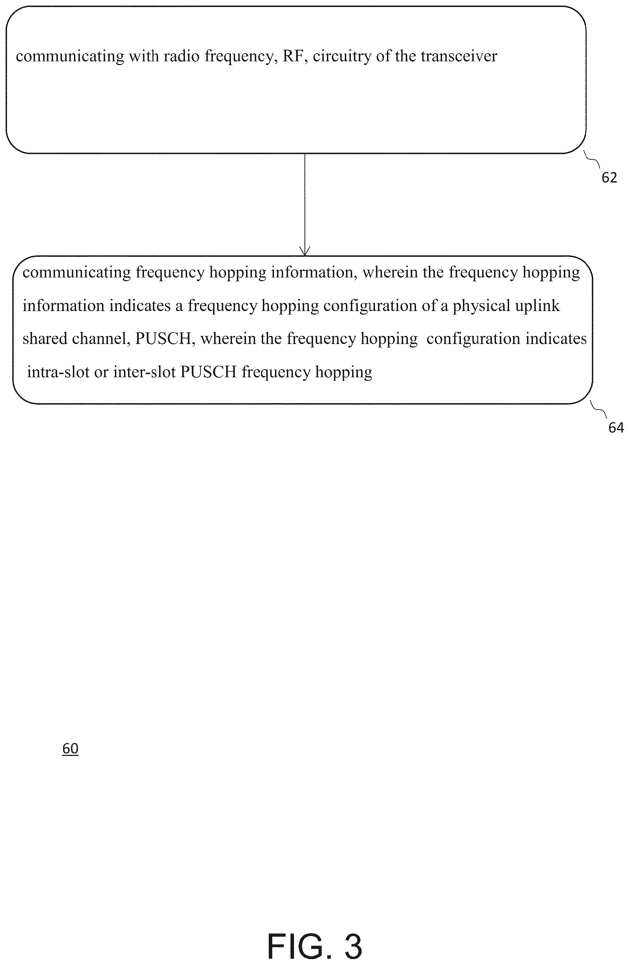

Fig. 3 shows a block diagram of an example of a method 60 for processing baseband signals in a transceiver 100 of a mobile communication system 400. The mobile communication system 400 can be assumed to be a new radio, NR, system or a 5th, 5G, or a later generation system. The method 60 comprises communicating 62 with radio frequency, RF, circuitry of the transceiver 100. The method further comprises communicating 64 frequency hopping information. The frequency hopping information indicates a frequency hopping configuration of a physical uplink shared channel, PUSCH, wherein the frequency hopping configuration indicates intra-slot or inter-slot PUSCH frequency hopping. In examples the method 60 may further comprise determining the frequency hopping configuration, e.g. by means of the processor 14. The method 60 may further comprise communicating based on the frequency hopping configuration.

In examples referring to PUSCH, the UE 40 side may transmit data according to the frequency hopping configuration and the access node 30, e.g. a gNodeB, may receive data according to the frequency hopping configuration.

In examples, e.g. in NR, frequency hopping offsets may be explicitly configured by UE-specific Radio Resource Control RRC configuration messages. Moreover, default values may be used in case RRC configuration is not valid or not available, e.g. during a random access procedure. As will be discussed in more detail in the following, examples may provide methods how to calculate frequency hopping (FH) offsets for the case of scheduling by fallback downlink control information, DCI format 0_0.

Examples may resolve the following aspects:

In NR a scheduling unit is one slot of 14 symbols for normal CP (12 symbols for extended CP) or non-slot, i.e. mini-slot of duration from 1 symbol to (slot length-1) symbols. Non-slot or mini-slot refers to using only a subset of symbols in a slot, e.g. less than the 14 symbols (12 for the extended CP configuration, respectively). LTE, for example, operates by scheduling units of one subframe (1ms), which consists of two slots of 0.5 ms duration. In LTE, intra-subframe frequency hopping is organized by hopping between slots. Examples introduce a different mechanism to split the PUSCH duration for hopping, e.g. in a NR system. For example, NR supports operation with multiple BWPs, where each UE may have a specific configured operational bandwidth within the carrier bandwidth. A UE may then be configured to use only a reduced bandwidth compared to the system bandwidth, which may decrease signal processing complexity at the UE. When active UEs have different overlapped BWPs, hopping rules with an offset equal to a fraction of an operation bandwidth may lead to collisions.

In examples the intra-slot or inter-slot PUSCH frequency hopping may refer to intra-mini-slot or inter-mini-slot PUSCH frequency hopping. An intra-mini-slot or an inter-mini-slot frequency hopping boundary within a slot for the total number of symbols N in an aggregated PUSCH transmission may be the same as for intra-slot PUSCH frequency hopping for N-symbol PUSCH transmission. Examples may hence provide frequency hopping rules, which can minimize or at least reduce the problem of collisions if multiple bandwidth parts are configured in a system carrier. Moreover, examples may provide mini-slot frequency hopping rules.

Examples may support both intra-slot and inter-slot frequency hopping. Examples may use inter-slot (mini-slot) hopping when repetitions are configured. Repetition may be used in mobile communication system to extend coverage or improve reception quality by repeating transmissions. At a receiver repeated versions of the same transmission can be combined and an improved signal quality in the combined version can be achieved. In examples, some aspects may be common to both intra-slot and inter-slots/mini-slot hopping.

Some examples may provide non-colliding hopping rules. A baseline assumption for a hopping rule may be to provide a non-colliding equation for UEs served by the same gNB. For example, LTE supports two basic types of hopping: fixed offset Type 1 (half-band or quarter-band) and random pattern-based Type 2 (cell-specific). Both types have non-colliding property for UEs served by the same gNB. However, in NR it is not straightforward to reuse LTE hopping types because of the feature of multiple bandwidth parts, which are UE-specific. If two UEs are configured with different overlapped bandwidth parts, then direct usage of LTE equations can lead to collided transmissions.

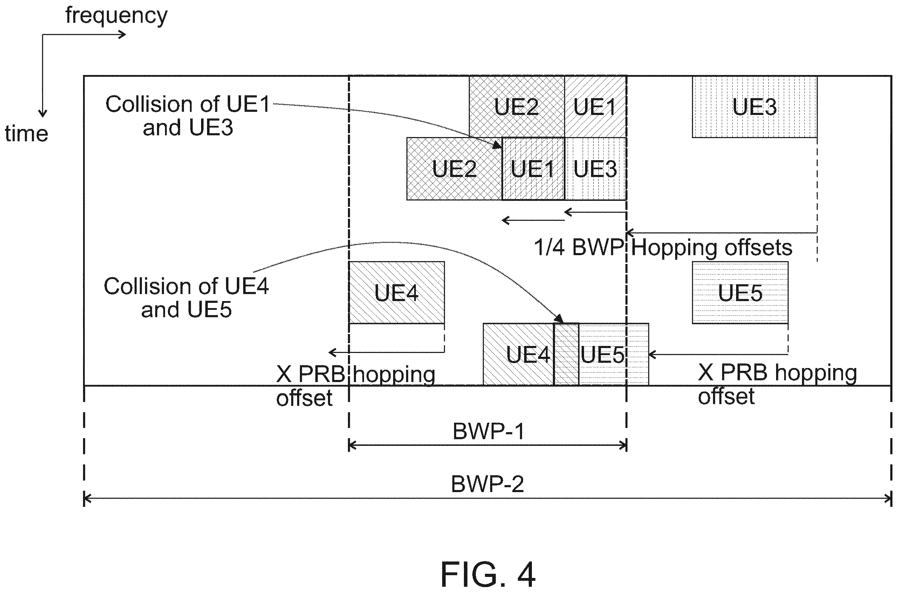

Fig. 4 illustrates collision in case of frequency hopping with multiple BWPs. Fig. 4 shows a view chart with time on the ordinate and frequency on the abscissa. The view chart can be seen as a frequency-time plane in which all system resources are shown. The resources are assigned to UEs, which is indicated by hachured boxes in Fig. 4. At the top of Fig. 4 three UEs, UE1, UE2, and UE3 are considered. Moreover, two BWPs, BWP-1, BWP-2, are illustrated, where two UEs, UE1, UE2, operate in BWP-1 and one UE, UE3, operates in BWP-2. In case of 1/4 BWP hopping is configured to all UEs, there may be cross-BWP collision. In order to avoid these issues, the hopping offset may be configurable more flexibly than in LTE in examples. In examples, the frequency hopping configuration may also indicate a frequency offset configuration.

In one example, a set of explicit physical resource blocks, PRB, offsets can be configured by NR minimum system information (MSI), NR remaining minimum system information (RMSI), NR other system information (OSI) or radio resource control (RRC) signaling or dynamically indicated in the DCI or a combination thereof. Generally, in examples frequency hopping offset values may be configured by one of or a combination of the elements of MSI, RMSI, OSI, RRC, or dynamic indication in DCI. The frequency hopping offset values may be configured in terms of PRBs. One option of examples is to configure a set of PRB offsets by higher layers via RRC signaling and use a DCI grant to point to one of these offsets by signaling an index of the offset in a 2-3 bit field. The offset can also include the hopping direction with respect to the initial transmission. According to the claimed invention, RRC signaling is used to define a set of frequency offsets and DCI is used to indicate at least one frequency offset from the set of frequency offsets. That way, flexibility on the offsets may be provided using RRC to préconfiguré a set of offsets and low latency may be achieved by using DCI pointers to the set offsets.

For example, the collision in Fig. 4 could be resolved by configuring 1/4 hopping to BWP-1 and 1/12 to BWP-2, i.e. the absolute offset in PRBs would be the same. This, however, might not help in case of offset wrapping within BWP, as shown in Fig. 4 at the bottom for UE4 and UE5, where fixed offset of X PRBs is applied but wrapped in BWP-1.

In another embodiment or example, hopping offsets can be determined in accordance with the configured BWP bandwidth. For example, in case when multiple BWPs are configured for a given UE, frequency hopping can be employed between multiple BWPs. For instance, if two BWPs are configured for a given UE, UE may switch from one BWP to another within a slot or across slots. For example, a set of different BWPs may be configured using RRC and DCI may be used to select one BWP from the set.

For random pattern-based hopping (like LTE Type 2), the solution might not be straightforward. One approach is to let a gNB handle potential collisions by scheduling. In another embodiment, a gNB can additionally configure to a UE frequency resources which should be skipped with frequency hopping in order to avoid collisions if the hopped transmission is going to cross the configured frequency region. For example, as illustrated in Fig. 4, for UEs scheduled in BWP-2, BWP-1 can be excluded in some examples if/when frequency hopping is applied. In some examples the frequency hopping is done within at least one configured BWP. The frequency hopping configuration may indicate a skipped frequency region for hopped transmission, e.g. exclude BWP-1 for hopping in BWP-2.

Some examples may allow colliding hopping rules. Examples, e.g. in NR, may adopt colliding hopping rules in order to allow more non-orthogonal resources for grant-free uplink (UL) transmission scheduling. For these purposes, the LTE Type 2 frequency hopping equation may be used with a modification to accommodate UE-specific identity for hopping sequence initialization. In one embodiment, c_init may be a function of cell-specific identity and UE-specific identity (e.g. RNTI) or a configured UE-specific addition to the c_init. For example, at least one frequency hopping type may employ a random sequence generator for determining hopping offsets. The frequency hopping configuration may indicate whether the random sequence generator is initialized by a cell-specific identity, a user equipment, UE, specific identity or a combination of cell-specific and UE-specific identities. Additionally, examples may allow disabling UE-specific sequence initialization by RRC configuration.

In examples, intra-slot hopping may be realized without repetitions. In LTE, the intra-subframe hopping may be realized by hopping between the two 7-symbol (6 symbol in case of extended CP) slots in a subframe. Examples may take the following aspects into account for designing intra-slot hopping:

Slot partitioning for hopping. Since PUSCH part of the slot may vary significantly, a rule to split the PUSCH for hopping may be defined in examples. For example, there is a single hopping boundary within a slot. Examples may reuse the design for long physical uplink control channel, PUCCH, intra-slot hopping partitioning for PUSCH partitioning, i.e., the frequency hopping boundary may be aligned between long PUCCH and PUSCH for intra-slot frequency hopping. For N-symbol PUSCH duration, the hopping boundary may be one of the following:

- Floor (N/2),
- Ceiling (N/2),
- N/2-1 where mod(N,4)=2; floor(N/2) otherwise,
- Floor(Ceiling (N/2)/2) $\times$ 2, and
- Starting symbol driven frequency hopping boundary.

In an example, an intra-slot PUSCH frequency hopping boundary is derived according to Floor (N/2), wherein N is a number of symbols in a PUSCH transmission. In this example there is a single hopping boundary within a slot/mini-slot. In other examples multiple hops per PUSCH transmission are also conceivable. The application of inter-slot, intra-slot, intra-mini-slot or inter-mini-slot hopping may be configured by one of or a combination of the elements of higher layer signaling, NR MSI, NR RMSI, NR OSI, RRC signaling, or dynamic indication by DCI.

In further examples, reference symbols may be taken into account, such as demodulationreference symbols (DM-RS). For example, in NR, a slot may contain only one DM-RS symbol in the beginning or a slot may contain additional DM-RS in a later part of the slot depending on configuration. In some examples, intra-slot hopping is carried out only if there is additional DM-RS in the second part of the slot.

Similar to LTE, the hopping rule for inter-slot and intra-slot may be common in some examples. For inter-slot, the hopping may be organized between configured repetitions. The repetitions could be configured in terms of slots or mini-slots in examples. For mini-slots, it may be important to restrict the hopping rate within a slot in order to avoid collisions with slot-based hopping and minimize or reduce the overhead of UE transient periods. In one embodiment or example, the mini-slot hopping boundary within a slot can be derived from the intra-slot hopping boundary as discussed in the previous section, i.e. for N symbols PUSCH duration within a slot, the hopping boundary can be:

- Floor (N/2),
- Ceiling (N/2),

- N/2-1 where mod(N,4)=2; floor(N/2) otherwise,
- Floor(Ceiling (N/2)/2) $\times$ 2, or
- Starting symbol driven frequency hopping boundary.

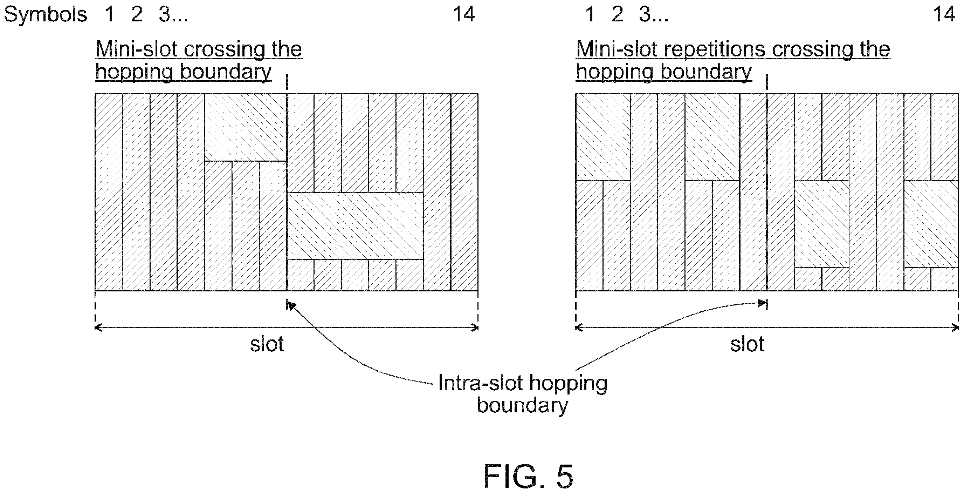

Fig. 5 shows an inter/intra-mini-slot frequency hopping boundary within a slot in an example. Fig. 5 shows two slots with 14 OFDM symbols each, where the abscissa shows the time direction and the ordinate shows the frequency direction. In both cases the intra-slot hopping boundary lies in the middle of the slot between the 7th and 8th symbol. On the left hand side a mini-slot transmission is indicated with duration of 8 symbols, starting with the 5th symbol and crossing the hopping boundary. At the hopping boundary (after transmission of 3 symbols) the frequency hop takes place and the remaining 5 symbols are transmitted at a different frequency. On the right hand side mini-slot repetitions are indicated crossing the hopping boundary. The transmission lasts over 2 symbols and is repeated three times (so 4 transmissions in total), each with a gap of 2 symbols. As shown in Fig. 5 the first two transmissions are before the hopping boundary and the last two transmissions are after the hopping boundary.

In Fig. 5 both cases are illustrated, a mini-slot crossing the hopping boundary and mini-slot repetitions within a slot. The hopping boundary is unchanged and derived from the intra-slot hopping boundary equation in this example. In another embodiment or example, in case when mini-slot or non-slot duration is relatively large, e.g., 4 or 7 symbol mini-slot or non-slot duration, intra-mini-slot frequency hopping can be employed, where DM-RS is inserted in each frequency hop. The hopping boundary for intra-mini-slot frequency hopping can be one of the options as listed above for inter-mini-slot hopping, with N being the mini-slot or non-slot transmission duration.

In another embodiment or example mini-slot aggregation is considered and inter-mini-slot frequency hopping can be applied. In particular, in case when N mini-slots are applied for mini-slot aggregation for data transmission, the hopping boundary can be defined as floor(N/2) or ceil(N/2), i.e., hopping occurs around the middle of aggregated mini-slots. Further, when inter-mini-slot frequency hopping is enabled, intra-mini-slot frequency hopping can be disabled. In further examples, in case of slot aggregation, inter-slot frequency hopping can be employed. In particular, in case when N slots are used for slot aggregation for data transmission, the hopping boundary can be defined as floor(N/2) or ceil(N/2), i.e., hopping occurs around the middle of aggregated slots. Further, when inter-slot frequency hopping is enabled, intra-slot frequency hopping can be disabled.

As already mentioned, whether to apply inter-slot, intra-mini-slot or inter-mini-slot hopping can be configured by higher layers via MSI, RMSI, OSI, RRC signaling or dynamically indicated by DCI or a combination thereof. Alternatively, this can be determined implicitly in accordance with mini-slot or non-slot transmission duration or indicated together with other aforementioned methods.

For example, a maximum number of PRBs in a NR carrier is 275. Therefore, in order to signal any offset within this bandwidth 9 bits are needed. This may be a large overhead to be placed in DCI. Hence, splitting the configurability between semi-static signaling and dynamic DCI is used in some examples. For example, sharing resource allocation bits and hopping bits may be utilized in examples, since it seems fair to assume UEs requiring frequency hopping are transmitting in a narrow bandwidth. Moreover, a relatively wideband transmission may already achieve good frequency diversity within the allocated bandwidth.

The number of hopping bits may also depend on UE frequency hopping bandwidth. However, the hopping bandwidth may change dynamically with switching of active bandwidth parts. In one embodiment or example, the hopping bandwidth may be explicitly configured to a UE additionally to the BWP bandwidth in order to e.g. protect PUCCH resources from hopping of PUSCH.

The hopping bandwidth size may be common among all configured BWP or may be configured per BWP. The hopping bandwidth itself may be explicitly configured as a PRB start/offset and PRB end/bandwidth within particular BWP. Taking the variability of hopping bandwidth into account, some examples consider a dependency of the resource allocation (RA) field with regard to UE hopping bandwidth size. For example, a number of hopping bits may be adopted as in the following table, showing a relation of a maximum hopping bandwidth and a number of hopping bits.

| PRB range | Number of hopping bits |
|---|---|
| <X1 (50) | 1 |
| X1 (50) <= and < X2 (150) | 2 |
| X2 (150) <= and <= X3 (275) | 2 or 3 |

In the table above, for large bandwidth, the number of hopping bits may be further increased from 2 to 3 since the maximum carrier bandwidth in NR may be almost three times larger than in LTE. The values X1, X2 may be reused from LTE to 50 PRB and 110 PRB respectively. In another option, the second bound X2 may be set to 150 PRB.

In examples, one or more hopping bits may indicate a hopping offset value in DCI. The hopping bits may be shared with a resource allocation indication field in case a hopping flag indicates enabled frequency hopping. A number of hopping bits may depend on a hopping bandwidth. For example, the number of hopping bits may depend on a number of physical resource blocks, PRB, used for data transmission, as:

1 bit if the number of PRBs is less than or equal to a first threshold, X1, 2 bits if the number of PRBs lies above the first threshold. The threshold X1 = 50, for example.

The hopping field itself may encode different hopping offsets as shown in the table below, which exemplifies a mapping of hopping bits to the offsets.

| Number of hopping bits | Hopping offsets |
| --- | --- |
| 1 | A0, -A0 |
| 2 | A0, -A0, A1, -A1 |
| 3 | A0, -A0, A1, -A1, A2, -A2, A3, -A3 |

Values of A0, A1, A2, and A3 may be configured UE-specifically by RRC. As it was mentioned, it may be either a configured fraction of the hopping bandwidth or an explicit PRB offset. It may seem that the fraction of hopping bandwidth is more a UE-specific attribute in NR and it may be hard to align collisions operating only by bandwidth fractions, therefore an explicit PRB offset may be a more suitable choice. Each value of the offset may be any in range of [0... hopping bandwidth-1].

Alternatively, each hopping bit combination may correspond to any configured value as shown in the table below, exemplifying another mapping of hopping bits to the offsets.

| Number of hopping bits | Hopping offsets |
| --- | --- |
| 1 | A0, A1 |
| 2 | A0, A1, A2, A3 |
| 3 | A0, A1, A2, A3, A4, A5, A6, A7 |

In yet another example, the number of hopping bits may be determined based on the largest configured UL BWP size or the largest configured hopping bandwidth.

Another outstanding issue is the configuration of frequency hopping and repetitions for Msg3 transmission. Msg3 is a message sent by a UE during a random access procedure and may, for example, be the third message in a predefined procedure,

e.g. first message: random access preamble from UE to e/gNB,
second message: random access response from e/gNB to UE, and
third message Msg3: RRC connection request.

So, when Msg3 is transmitted all related RRC configuration parameters may either be set to a default values or be signaled in RMSI. Intra-slot hopping for Msg3 may be used and it may use default values for Msg3 transmission. The hopping offset for Msg3 could be based on a fraction of an initial BWP since other configurations of hopping bandwidth are not available at this point. For example, the following hopping offsets may be assumed by a UE for Msg3:

| Number of hopping bits | Default hopping offsets |
| --- | --- |
| 1 | reserved, BW/2 |
| 2 | reserved, BW/2, BW/4, -BW/4 |
| 3 | reserved, BW/2, BW/4, -BW/4, BW/8, -BW/8, BW/12, -BW/12 |

An uncertain UE behavior may result when it is scheduled by the fall-back DCI format 0_0 in common search space (CSS) or UE-specific search space. The frequency hopping procedure may rely on RRC configured frequency hopping mode (intra-slot or inter-slot) and frequency hopping offsets. For the fall-back case, there might not be a valid RRC configuration assumed, therefore a default assumption for these parameters may be used in examples.

In an embodiment or example, the Msg3 transmission approach may be used, wherein only intra-slot frequency hopping is assumed and the frequency hopping offsets are only a function of initial UL bandwidth part size so that there is no RRC configuration involved. The mapping of hopping bits to the defaults frequency hopping offsets is presented in table below:

| Number of PRBs in referred UL BWP | Value of $N_{UL,hop}$ hopping bits | Frequency offset for 2nd hop |
|---|---|---|
| $N_{BWP}^{size} < 50$ | 0 | $N_{BWP}^{size}/2$ |
| | 1 | $N_{BWP}^{size}/4$ |
| $N_{BWP}^{size} \geq 50$ | 00 | $N_{BWP}^{size}/2$ |
| | 01 | $N_{BWP}^{size}/4$ |
| | 10 | $-N_{BWP}^{size}/4$ |
| | 11 | reserved |

In some examples the initial UL bandwidth part may be used for identification of frequency hopping offset values. The following may be considered in this context:

In an embodiment or example, the size of the bandwidth part for defining FH offset as a fraction is taken as the scheduled BWP size. In particular if the BWP size B1 is associated with the resource indication value, RIV, field used to schedule PUSCH in BWP of size B2, the frequency hopping offsets are calculated as a fraction of B2 size.

In another example or embodiment, in case the DCI format size-defining BWP and the scheduled BWP have the same size the number of FH offsets is identified from the scheduled BWP size. In another embodiment, in case the size-defining BWP and scheduled BWP have different sizes, the number of FH offsets (1 or 2) is dependent on the mechanism of handling RIV field for such a case, but in general should correspond to the effective BWP size supported by the RIV field size. In particular, the number of hopping bits may be derived from size $N_{BWP}^{size}$ size used to define RIV field bit size.

As an example of the last embodiment, if the scheduling DCI format 0_0 is detected in a PDCCH common search space, then the number of FH offsets and their values may be interpreted to correspond to the initial UL BWP. On the other hand, if the scheduling DCI format 0_0 is detected in a PDCCH UE-specific search space, then the number of FH offsets and their values are interpreted to correspond to the currently active UL BWP. In examples frequency hopping offsets for the case of scheduling by fallback downlink control information, DCI, format 0_0 in a common search space are calculated using the same procedure as for Msg3 frequency hopping. A frequency hopping offset for frequency hopping related to Msg3 may be based on a default frequency offset calculation. A number of frequency hopping offsets is a function of an allocated bandwidth part, BWP, size used to define a resource value indicator, RVI, field in a downlink control information, DCI, scheduling PUSCH.

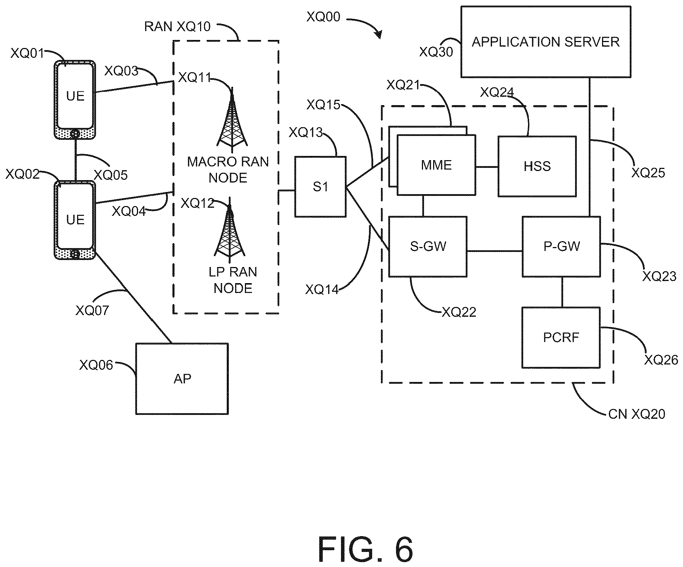

Fig. 6 shows an example of a mobile communication system. Fig. 6 illustrates an architecture of a system XQ00 of a network in accordance with some embodiments. The system XQ00 is shown to include a user equipment (UE) XQ01 and a UE XQ02. As used herein, the term "user equipment" or "UE" may refer to a device with radio communication capabilities and may describe a remote user of network resources in a communications network. The term "user equipment" or "UE" may be considered synonymous to, and may be referred to as client, mobile, mobile device, mobile terminal, user terminal, mobile unit, mobile station, mobile user, subscriber, user, remote station, access agent, user agent, receiver, radio equipment, reconfigurable radio equipment, reconfigurable mobile device, etc. Furthermore, the term "user equipment" or "UE" may include any type of wireless/wired device or any computing device including a wireless communications interface. In this example, UEs XQ01 and XQ02 are illustrated as smartphones (e.g., handheld touchscreen mobile computing devices connectable to one or more cellular networks), but may also comprise any mobile or non-mobile computing device, such as consumer electronics devices, cellular phones, smartphones, feature phones, tablet computers, wearable computer devices, personal digital assistants (PDAs), pagers, wireless handsets, desktop computers, laptop computers, invehicle infotainment (IVI), in-car entertainment (ICE) devices, an Instrument Cluster (IC), head-up display (HUD) devices, onboard diagnostic (OBD) devices, dashtop mobile equipment (DME), mobile data terminals (MDTs), Electronic Engine Management System (EEMS), electronic/engine control units (ECUs), electronic/engine control modules (ECMs), embedded systems, microcontrollers, control modules, engine management systems (EMS), networked or "smart" appliances, machine-type communications (MTC) devices, machine-to-machine (M2M), Internet of Things (IoT) devices, and/or the like.

In some embodiments, any of the UEs XQ01 and XQ02 can comprise an Internet of Things (IoT) UE, which can comprise a network access layer designed for low-power IoT applications utilizing short-lived UE connections. An IoT UE can utilize technologies such as machine-to-machine (M2M) or machine-type communications (MTC) for exchanging data with an MTC server or device via a public land mobile network (PLMN), Proximity-Based Service (ProSe) or device-to-device (D2D) communication, sensor networks, or IoT networks. The M2M or MTC exchange of data may be a machine-initiated exchange of data. An IoT network describes interconnecting IoT UEs, which may include uniquely identifiable embedded computing devices (within the Internet infrastructure), with short-lived connections. The IoT UEs may execute background applications (e.g., keep-alive messages, status updates, etc.) to facilitate the connections of the IoT network.

The UEs XQ01 and XQ02 may be configured to connect, e.g., communicatively couple, with a radio access network (RAN) XQ10. The RAN XQ10 may be, for example, an Evolved Universal Mobile Telecommunications System (UMTS) Terrestrial Radio Access Network (E-UTRAN), a NextGen RAN (NG RAN), or some other type of RAN. The UEs XQ01 and XQ02 utilize connections (or channels) XQ03 and XQ04, respectively, each of which comprises a physical communications interface or layer (discussed in further detail infra). As used herein, the term "channel" may refer to any transmission medium, either tangible or intangible, which is used to communicate data or a data stream. The term "channel" may be synonymous with and/or equivalent to "communications channel," "data communications channel," "transmission channel," "data transmission channel," "access channel," "data access channel," "link," "data link," "carrier," "radiofrequency carrier," and/or any other like term denoting a pathway or medium through which data is communicated. Additionally, the term "link" may refer to a connection between two devices through a Radio Access Technology (RAT) for the purpose of transmitting and receiving information. In this example, the connections XQ03 and XQ04 are illustrated as an air interface to enable communicative coupling, and can be consistent with cellular communications protocols, such as a Global System for Mobile Communications (GSM) protocol, a code-division multiple access (CDMA) network protocol, a Push-to-Talk (PTT) protocol, a PTT over Cellular (POC) protocol, a Universal Mobile Telecommunications System (UMTS) protocol, a 3GPP Long Term Evolution (LTE) protocol, a fifth generation (5G) protocol, a New Radio (NR) protocol, and the like.

In this embodiment, the UEs XQ01 and XQ02 may further directly exchange communication data via a ProSe interface XQ05. The ProSe interface XQ05 may alternatively be referred to as a sidelink (SL) interface comprising one or more logical channels, including but not limited to a Physical Sidelink Control Channel (PSCCH), a Physical Sidelink Shared Channel (PSSCH), a Physical Sidelink Discovery Channel (PSDCH), and a Physical Sidelink Broadcast Channel (PSBCH). In various implementations, the SL interface XQ05 may be used in vehicular applications and communications technologies, which are often referred to as V2X systems. V2X is a mode of communication where UEs (for example, UEs XQ01, XQ02) communicate with each other directly over the PC5/SL interface XQ05 and can take place when the UEs XQ01, XQ02 are served by RAN nodes XQ11, XQ12 or when one or more UEs are outside a coverage area of the RAN XQ10. V2X may be classified into four different types: vehicle-to-vehicle (V2V), vehicle to-infrastructure (V2I), vehicle-to-network (V2N), and vehicle-to-pedestrian (V2P). These V2X applications can use "cooperative awareness" to provide more intelligent services for end-users. For example, vehicle UEs (vUEs) XQ01, XQ02, RAN nodes XQ11, XQ12, application servers XQ30, and pedestrian UEs XQ01, XQ02 may collect knowledge of their local environment (for example, information received from other vehicles or sensor equipment in proximity) to process and share that knowledge in order to provide more intelligent services, such as cooperative collision warning, autonomous driving, and the like. In these implementations, the UEs XQ01, XQ02 may be implemented/employed as Vehicle Embedded Communications Systems (VECS) or vUEs.

The UE XQ02 is shown to be configured to access an access point (AP) XQ06 (also referred to as "WLAN node XQ06", "WLAN XQ06", "WLAN Termination XQ06" or "WT XQ06" or the like) via connection XQ07. The connection XQ07 can comprise a local wireless connection, such as a connection consistent with any IEEE 802.11 protocol, wherein the AP XQ06 would comprise a wireless fidelity (WiFi®) router. In this example, the AP XQ06 is shown to be connected to the Internet without connecting to the core network of the wireless system (described in further detail below). In various embodiments, the UE XQ02, RAN XQ10, and AP XQ06 may be configured to utilize LTE-WLAN aggregation (LWA) operation and/or WLAN LTE/WLAN Radio Level Integration with IPsec Tunnel (LWIP) operation. The LWA operation may involve the UE XQ02 in RRC_CONNECTED being configured by a RAN node XQ11, XQ12 to utilize radio resources of LTE and WLAN. LWIP operation may involve the UE XQ02 using WLAN radio resources (e.g., connection XQ07) via Internet Protocol Security (IPsec) protocol tunneling to authenticate and encrypt packets (e.g., internet protocol (IP) packets) sent over the connection XQ07. IPsec tunneling may include encapsulating entirety of original IP packets and adding a new packet header, thereby protecting the original header of the IP packets.

The RAN XQ10 can include one or more access nodes that enable the connections XQ03 and XQ04. As used herein, the terms "access node," "access point," or the like may describe equipment that provides the radio baseband functions for data and/or voice connectivity between a network and one or more users. These access nodes can be referred to as base stations (BS), NodeBs, evolved NodeBs (eNBs), next Generation NodeBs (gNB), RAN nodes, Road Side Units (RSUs), and so forth, and can comprise ground stations (e.g., terrestrial access points) or satellite stations providing coverage within a geographic area (e.g., a cell). The term "Road Side Unit" or "RSU" may refer to any transportation infrastructure entity implemented in or by a gNB/eNB/RAN node or a stationary (or relatively stationary) UE, where an RSU implemented in or by a UE may be referred to as a "UE-type RSU", an RSU implemented in or by an eNB may be referred to as an "eNB-type RSU." The RAN XQ10 may include one or more RAN nodes for providing macrocells, e.g., macro RAN node XQ11, and one or more RAN nodes for providing femtocells or picocells (e.g., cells having smaller coverage areas, smaller user capacity, or higher bandwidth compared to macrocells), e.g., low power (LP) RAN node XQ12.

Any of the RAN nodes XQ11 and XQ12 can terminate the air interface protocol and can be the first point of contact for the UEs XQ01 and XQ02. In some embodiments, any of the RAN nodes XQ11 and XQ12 can fulfill various logical functions for the RAN XQ10 including, but not limited to, radio network controller (RNC) functions such as radio bearer management, uplink and downlink dynamic radio resource management and data packet scheduling, and mobility management.

In accordance with some embodiments, the UEs XQ01 and XQ02 can be configured to communicate using Orthogonal Frequency-Division Multiplexing (OFDM) communication signals with each other or with any of the RAN nodes XQ11 and XQ12 over a multicarrier communication channel in accordance with various communication techniques, such as, but not limited to, an Orthogonal Frequency-Division Multiple Access (OFDMA) communication technique (e.g., for downlink communications) or a Single Carrier Frequency Division Multiple Access (SC-FDMA) communication technique (e.g., for uplink and ProSe or sidelink communications), although the scope of the embodiments is not limited in this respect. The OFDM signals can comprise a plurality of orthogonal subcarriers.

In some embodiments, a downlink resource grid can be used for downlink transmissions from any of the RAN nodes XQ11 and XQ12 to the UEs XQ01 and XQ02, while uplink transmissions can utilize similar techniques. The grid can be a time-frequency grid, called a resource grid or time-frequency resource grid, which is the physical resource in the downlink in each slot. Such a time-frequency plane representation is a common practice for OFDM systems, which makes it intuitive for radio resource allocation. Each column and each row of the resource grid corresponds to one OFDM symbol and one OFDM subcarrier, respectively. The duration of the resource grid in the time domain corresponds to one slot in a radio frame. The smallest time-frequency unit in a resource grid is denoted as a resource element. Each resource grid comprises a number of resource blocks, which describe the mapping of certain physical channels to resource elements. Each resource block comprises a collection of resource elements; in the frequency domain, this may represent the smallest quantity of resources that currently can be allocated. There are several different physical downlink channels that are conveyed using such resource blocks.

The physical downlink shared channel (PDSCH) may carry user data and higher-layer signaling to the UEs XQ01 and XQ02. The physical downlink control channel (PDCCH) may carry information about the transport format and resource allocations related to the PDSCH channel, among other things. It may also inform the UEs XQ01 and XQ02 about the transport format, resource allocation, and H-ARQ (Hybrid Automatic Repeat Request) information related to the uplink shared channel. Typically, downlink scheduling (assigning control and shared channel resource blocks to the UE XQ02 within a cell) may be performed at any of the RAN nodes XQ11 and XQ12 based on channel quality information fed back from any of the UEs XQ01 and XQ02. The downlink resource assignment information may be sent on the PDCCH used for (e.g., assigned to) each of the UEs XQ01 and XQ02. The PDCCH may use control channel elements (CCEs) to convey the control information. Before being mapped to resource elements, the PDCCH complex-valued symbols may first be organized into quadruplets, which may then be permuted using a sub-block interleaver for rate matching. Each PDCCH may be transmitted using one or more of these CCEs, where each CCE may correspond to nine sets of four physical resource elements known as resource element groups (REGs). Four Quadrature Phase Shift Keying (QPSK) symbols may be mapped to each REG. The PDCCH can be transmitted using one or more CCEs, depending on the size of the downlink control information (DCI) and the channel condition. There can be four or more different PDCCH formats defined in LTE with different numbers of CCEs (e.g., aggregation level, L=1, 2, 4, or 8).

Some embodiments may use concepts for resource allocation for control channel information that are an extension of the above-described concepts. For example, some embodiments may utilize an enhanced physical downlink control channel (EPDCCH) that uses PDSCH resources for control information transmission. The EPDCCH may be transmitted using one or more enhanced control channel elements (ECCEs). Similar to above, each EC-CE may correspond to nine sets of four physical resource elements known as an enhanced resource element groups (EREGs). An ECCE may have other numbers of EREGs in some situations.

The RAN XQ10 is shown to be communicatively coupled to a core network (CN) XQ20 via an S1 interface XQ13. In embodiments, the CN XQ20 may be an evolved packet core (EPC) network, a NextGen Packet Core (NPC) network, or some other type of CN. In this embodiment the S1 interface XQ13 is split into two parts: the S1-U interface XQ14, which carries traffic data between the RAN nodes XQ11 and XQ12 and the serving gateway (S-GW) XQ22, and the S1-mobility management entity (MME) interface XQ15, which is a signaling interface between the RAN nodes XQ11 and XQ12 and MMEs XQ21.

In this embodiment, the CN XQ20 comprises the MMEs XQ21, the S-GW XQ22, the Packet Data Network (PDN) Gateway (P-GW) XQ23, and a home subscriber server (HSS) XQ24. The MMEs XQ21 may be similar in function to the control plane of legacy Serving General Packet Radio Service (GPRS) Support Nodes (SGSN). The MMEs XQ21 may manage mobility aspects in access such as gateway selection and tracking area list management. The HSS XQ24 may comprise a database for network users, including subscription-related information to support the network entities' handling of communication sessions. The CN XQ20 may comprise one or several HSSs XQ24, depending on the number of mobile subscribers, on the capacity of the equipment, on the organization of the network, etc. For example, the HSS XQ24 can provide support for routing/roaming, authentication, authorization, naming/addressing resolution, location dependencies, etc.

The S-GW XQ22 may terminate the S1 interface XQ13 towards the RAN XQ10, and routes data packets between the RAN XQ10 and the CN XQ20. In addition, the S-GW XQ22 may be a local mobility anchor point for inter-RAN node handovers and also may provide an anchor for inter-3GPP mobility. Other responsibilities may include lawful intercept, charging, and some policy enforcement.

The P-GW XQ23 may terminate an SGi interface toward a PDN. The P-GW XQ23 may route data packets between the EPC network XQ20 and external networks such as a network including the application server XQ30 (alternatively referred to as application function (AF)) via an Internet Protocol (IP) interface XQ25. Generally, the application server XQ30 may be an element offering applications that use IP bearer resources with the core network (e.g., UMTS Packet Services (PS) domain, LTE PS data services, etc.). In this embodiment, the P-GW XQ23 is shown to be communicatively coupled to an application server XQ30 via an IP communications interface XQ25. The application server XQ30 can also be configured to support one or more communication services (e.g., Voice-over-Internet Protocol (VoIP) sessions, PTT sessions, group communication sessions, social networking services, etc.) for the UEs XQ01 and XQ02 via the CN XQ20.

The P-GW XQ23 may further be a node for policy enforcement and charging data collection. Policy and Charging Rules Function (PCRF) XQ26 is the policy and charging control element of the CN XQ20. In a non-roaming scenario, there may be a single PCRF in the Home Public Land Mobile Network (HPLMN) associated with a UE's Internet Protocol Connectivity Access Network (IP-CAN) session. In a roaming scenario with local breakout of traffic, there may be two PCRFs associated with a UE's IP-CAN session: a Home PCRF (H-PCRF) within an HPLMN and a Visited PCRF (V-PCRF) within a Visited Public Land Mobile Network (VPLMN). The PCRF XQ26 may be communicatively coupled to the application server XQ30 via the P-GW XQ23. The application server XQ30 may signal the PCRF XQ26 to indicate a new service flow and select the appropriate Quality of Service (QoS) and charging parameters. The PCRF XQ26 may provision this rule into a Policy and Charging Enforcement Function (PCEF) (not shown) with the appropriate traffic flow template (TFT) and QoS class of identifier (QCI), which commences the QoS and charging as specified by the application server XQ30.

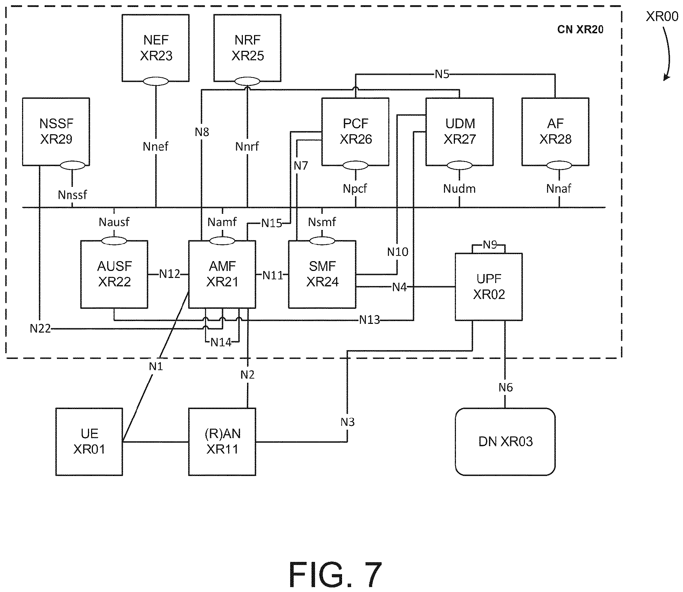

Fig. 7 shows another example of a mobile communication system. Fig. 7 illustrates an architecture of a system XR00 of a network in accordance with some embodiments. The system XR00 is shown to include a UE XR01, which may be the same or similar to UEs XQ01 and XQ02 discussed previously; a RAN node XR11, which may be the same or similar to RAN nodes XQ11 and XQ12 discussed previously; a Data Network (DN) XR03, which may be, for example, operator services, Internet access or 3rd party services; and a 5G Core Network (5GC or CN) XR20.

The CN XR20 may include an Authentication Server Function (AUSF) XR22; an Access and Mobility Management Function (AMF) XR21; a Session Management Function (SMF) XR24; a Network Exposure Function (NEF) XR23; a Policy Control Function (PCF) XR26; a Network Function (NF) Repository Function (NRF) XR25; a Unified Data Management (UDM) XR27; an Application Function (AF) XR28; a User Plane Function (UPF) XR02; and a Network Slice Selection Function (NSSF) XR29.

The UPF XR02 may act as an anchor point for intra-RAT and inter-RAT mobility, an external PDU session point of interconnect to DN XR03, and a branching point to support multihomed PDU session. The UPF XR02 may also perform packet routing and forwarding, perform packet inspection, enforce user plane part of policy rules, lawfully intercept packets (UP collection), traffic usage reporting, perform QoS handling for user plane (e.g., packet filtering, gating, UL/DL rate enforcement), perform Uplink Traffic verification (e.g., SDF to QoS flow mapping), transport level packet marking in the uplink and downlink, and downlink packet buffering and downlink data notification triggering. UPF XR02 may include an uplink classifier to support routing traffic flows to a data network. The DN XR03 may represent various network operator services, Internet access, or third party services. DN XR03 may include, or be similar to, application server XQ30 discussed previously. The UPF XR02 may interact with the SMF XR24 via an N4 reference point between the SMF XR24 and the UPF XR02.

The AUSF XR22 may store data for authentication of UE XR01 and handle authentication related functionality. The AUSF XR22 may facilitate a common authentication framework for various access types. The AUSF XR22 may communicate with the AMF XR21 via an N12 reference point between the AMF XR21 and the AUSF XR22; and may communicate with the UDM XR27 via an N13 reference point between the UDM XR27 and the AUSF XR22. Additionally, the AUSF XR22 may exhibit an Nausf service-based interface.

The AMF XR21 may be responsible for registration management (e.g., for registering UE XR01, etc.), connection management, reachability management, mobility management, and lawful interception of AMF-related events, and access authentication and authorization. The AMF XR21 may be a termination point for an N11 reference point between the AMF XR21 and the SMF XR24. The AMF XR21 may provide transport for Session Management (SM) messages between the UE XR01 and the SMF XR24, and act as a transparent proxy for routing SM messages. AMF XR21 may also provide transport for short message service (SMS) messages between UE XR01 and an SMS function (SMSF) (not shown by Fig. 7). AMF XR21 may act as Security Anchor Function (SEAF), which may include interaction with the AUSF XR22 and the UE XR01, as well as receipt of an intermediate key that was established as a result of the UE XR01 authentication process. Where UMTS Subscriber Identity Module (USIM) based authentication is used, the AMF XR21 may retrieve the security material from the AUSF XR22. AMF XR21 may also include a Security Context Management (SCM) function, which receives a key from the SEAF that it uses to derive access-network specific keys. Furthermore, AMF XR21 may be a termination point of RAN CP interface, which may include or be an N2 reference point between the (R)AN XR11 and the AMF XR21; and the AMF XR21 may be a termination point of NAS (N1) signalling, and perform NAS ciphering and integrity protection.

AMF XR21 may also support NAS signalling with a UE XR01 over an N3 interworkingfunction (IWF) interface. The N3IWF may be used to provide access to untrusted entities. N3IWF may be a termination point for the N2 interface between the (R)AN XR11 and the AMF XR21 for the control plane, and may be a termination point for the N3 reference point between the (R)AN XR11 and the UPF XR02 for the user plane. As such, the AMF XR21 may handle N2 signalling from the SMF XR24 and the AMF XR21 for PDU sessions and QoS, encapsulate/de-encapsulate packets for IPSec and N3 tunnelling, mark N3 user-plane packets in the uplink, and enforce QoS corresponding to N3 packet marking, which may take into account QoS requirements associated to such marking received over N2. N3IWF may also relay uplink and downlink control-plane NAS signalling between the UE XR01 and AMF XR21 via an N1 reference point between the UE XR01 and the AMF XR21, and relay uplink and downlink user-plane packets between the UE XR01 and UPF XR02. The N3IWF also provides mechanisms for IPsec tunnel establishment with the UE XR01. The AMF XR21 may exhibit an Namf service-based interface, and may be a termination point for an N14 reference point between two AMFs XR21 and an N17 reference point between the AMF XR21 and a 5G-Equipment Identity Register (5G-EIR) (not shown by Fig. 7).

The SMF XR24 may be responsible for session management (e.g., session establishment, modify and release, including tunnel maintain between UPF and AN node). The SMF XR24 may also allocate and manage UE IP addresses (including optional authorization), select and control UP functions, and configures traffic steering at the UPF XR02 to route traffic to a proper destination. The SMF XR24 may also terminate interfaces towards Policy Control Functions, control part of policy enforcement and QoS, and perform lawful interception (e.g., for SM events and interface to LI system). The SMF XR24 may also terminate SM parts of NAS messages, provide downlink data notification, and initiate AN specific SM information, sent via AMF over N2 to AN, and determine Session and Service Continuity (SSC) mode of a session.

The SMF XR24 may include the following roaming functionality: handle local enforcement to apply QoS SLAs (VPLMN); charging data collection and charging interface (VPLMN); lawful intercept (in VPLMN for SM events and interface to LI System); and support for interaction with external DN for transport of signalling for PDU session authorization/authentication by external DN. An N16 reference point between two SMFs XR24 may be included in the system XR00, which may be between another SMF XR24 in a visited network and the SMF XR24 in the home network in roaming scenarios. Additionally, the SMF XR24 may exhibit the Nsmf service-based interface.

The NEF XR23 may provide means for securely exposing the services and capabilities provided by 3GPP network functions for third party, internal exposure/re-exposure, Application Functions (e.g., AF XR28), edge computing or fog computing systems, etc. In such embodiments, the NEF XR23 may authenticate, authorize, and/or throttle the AFs. NEF XR23 may also translate information exchanged with the AF XR28 and information exchanged with internal network functions. For example, the NEF XR23 may translate between an AF-Service-Identifier and an internal 5GC information. NEF XR23 may also receive information from other network functions (NFs) based on exposed capabilities of other network functions. This information may be stored at the NEF XR23 as structured data, or at a data storage NF using standardized interfaces. The stored information can then be re-exposed by the NEF XR23 to other NFs and AFs, and/or used for other purposes such as analytics. Additionally, the NEF XR23 may exhibit an Nnef service-based interface.

The NRF XR25 may support service discovery functions, receive NF Discovery Requests from NF instances, and provide the information of the discovered NF instances to the NF instances. NRF XR25 also maintains information of available NF instances and their supported services. As used herein, the terms "instantiate", "instantiation", and the like may refer to the creation of an instance, and an "instance" may refer to a concrete occurrence of an object, which may occur, for example, during execution of program code. Additionally, the NRF XR25 may exhibit the Nnrf service-based interface.

The PCF XR26 may provide policy rules to control plane function(s) to enforce them, and may also support unified policy framework to govern network behavior. The PCF XR26 may also implement a front end (FE) to access subscription information relevant for policy decisions in a Unified Data Repository (UDR) of the UDM XR27. The PCF XR26 may communicate with the AMF XR21 via an N15 reference point between the PCF XR26 and the AMF XR21, which may include a PCF XR26 in a visited network and the AMF XR21 in case of roaming scenarios. The PCF XR26 may communicate with the AF XR28 via an N5 reference point between the PCF XR26 and the AF XR28; and with the SMF XR24 via an N7 reference point between the PCF XR26 and the SMF XR24. The system XR00 and/or CN XR20 may also include an N24 reference point between the PCF XR26 (in the home network) and a PCF XR26 in a visited network. Additionally, the PCF XR26 may exhibit an Npcf service-based interface.

The UDM XR27 may handle subscription-related information to support the network entities' handling of communication sessions, and may store subscription data of UE XR01. For example, subscription data may be communicated between the UDM XR27 and the AMF XR21 via an N8 reference point between the UDM XR27 and the AMF XR21 (not shown by Fig. 7). The UDM XR27 may include two parts, an application FE and a User Data Repository (UDR) (the FE and UDR are not shown by Fig. 7). The UDR may store subscription data and policy data for the UDM XR27 and the PCF XR26, and/or structured data for exposure and application data (including Packet Flow Descriptions (PFDs) for application detection, application request information for multiple UEs XR01) for the NEF XR23. The Nudr service-based interface may be exhibited by the UDR to allow the UDM XR27, PCF XR26, and NEF XR23 to access a particular set of the stored data, as well as to read, update (e.g., add, modify), delete, and subscribe to notification of relevant data changes in the UDR. The UDM XR27 may include a UDM FE, which is in charge of processing credentials, location management, subscription management and so on. Several different front ends may serve the same user in different transactions. The UDM-FE accesses subscription information stored in the UDR and performs authentication credential processing; user identification handling; access authorization; registration/mobility management; and subscription management. The UDR may interact with the SMF XR24 via an N10 reference point between the UDM XR27 and the SMF XR24. UDM XR27 may also support SMS management, wherein an SMS-FE implements the similar application logic as discussed previously. Additionally, the UDM XR27 may exhibit the Nudm service-based interface.

The AF XR28 may provide application influence on traffic routing, provide access to the Network Capability Exposure (NCE), and interact with the policy framework for policy control. The NCE may be a mechanism that allows the 5GC and AF XR28 to provide information to each other via NEF XR23, which may be used for edge computing implementations. In such implementations, the network operator and third party services may be hosted close to the UE XR01 access point of attachment to achieve an efficient service delivery through the reduced end-to-end latency and load on the transport network. For edge computing implementations, the 5GC may select a UPF XR02 close to the UE XR01 and execute traffic steering from the UPF XR02 to DN XR03 via the N6 interface. This may be based on the UE subscription data, UE location, and information provided by the AF XR28. In this way, the AF XR28 may influence UPF (re)selection and traffic routing. Based on operator deployment, when AF XR28 is considered to be a trusted entity, the network operator may permit AF XR28 to interact directly with relevant NFs. Additionally, the AF XR28 may exhibit an Naf service-based interface.

The NSSF XR29 may select a set of network slice instances serving the UE XR01. The NSSF XR29 may also determine allowed Network Slice Selection Assistance Information (NSSAI) and the mapping to the Subscribed Single-NSSAIs (S-NSSAIs), if needed. The NSSF XR29 may also determine the AMF set to be used to serve the UE XR01, or a list of candidate AMF(s) XR21 based on a suitable configuration and possibly by querying the NRF XR25. The selection of a set of network slice instances for the UE XR01 may be triggered by the AMF XR21 with which the UE XR01 is registered by interacting with the NSSF XR29, which may lead to a change of AMF XR21. The NSSF XR29 may interact with the AMF XR21 via an N22 reference point between AMF XR21 and NSSF XR29; and may communicate with another NSSF XR29 in a visited network via an N31 reference point (not shown by Fig. 7). Additionally, the NSSF XR29 may exhibit an Nnssf service-based interface.

As discussed previously, the CN XR20 may include an SMSF, which may be responsible for SMS subscription checking and verification, and relaying SM messages to/from the UE XR01 to/from other entities, such as an Short Message Service (SMS)-Global Systems for Mobile Communication (GMSC)/Inter-Working Mobile Switching Center (IWMSC)/SMSrouter. The SMS may also interact with AMF XR21 and UDM XR27 for notification procedure that the UE XR01 is available for SMS transfer (e.g., set a UE not reachable flag, and notifying UDM XR27 when UE XR01 is available for SMS).

The CN XR20 may also include other elements that are not shown by Fig. 7, such as a Data Storage system/architecture, a 5G-Equipment Identity Register (5G-EIR), a Security Edge Protection Proxy (SEPP), and the like. The Data Storage system may include a Structured Data Storage network function (SDSF), an Unstructured Data Storage network function (UDSF), and/or the like. Any NF may store and retrieve unstructured data into/from the UDSF (e.g., UE contexts), via N18 reference point between any NF and the UDSF (not shown by Fig. 7). Individual NFs may share a UDSF for storing their respective unstructured data or individual NFs may each have their own UDSF located at or near the individual NFs. Additionally, the UDSF may exhibit an Nudsf service-based interface (not shown by Fig. 7). The 5G-EIR may be an NF that checks the status of Permanent Equipment Identifiers (PEI) for determining whether particular equipment/entities are blacklisted from the network; and the SEPP may be a non-transparent proxy that performs topology hiding, message filtering, and policing on inter-PLMN control plane interfaces.

Additionally, there may be many more reference points and/or service-based interfaces between the NF services in the NFs; however, these interfaces and reference points have been omitted from Fig. 7 for clarity. In one example, the CN XR20 may include an Nx interface, which is an inter-CN interface between the MME (e.g., MME XQ21) and the AMF XR21 in order to enable interworking between CN XR20 and CN XQ20. Other example interfaces/reference points may include an N5g-EIR service-based interface exhibited by a 5G-EIR, an N27 reference point between an NRF in the visited network and the NRF in the home network; and an N31 reference point between the NSSF in the visited network and the NSSF in the home network.

In yet another example, system XR00 may include multiple RAN nodes XR11 wherein an Xn interface is defined between two or more RAN nodes XR11 (e.g., gNBs and the like) connecting to 5GC XR20, between a RAN node XR11 (e.g., gNB) connecting to 5GC XR20 and an eNB (e.g., a RAN node XQ11 of Fig. 6), and/or between two eNBs connecting to 5GC XR20. In some implementations, the Xn interface may include an Xn user plane (Xn-U) interface and an Xn control plane (Xn-C) interface. The Xn-U may provide nonguaranteed delivery of user plane PDUs and support/provide data forwarding and flow control functionality. The Xn-C may provide management and error handling functionality, functionality to manage the Xn-C interface; and mobility support for UE XR01 in a connected mode (e.g., CM-CONNECTED) including functionality to manage the UE mobility for connected mode between one or more RAN nodes XR11. The mobility support may include context transfer from an old (source) serving RAN node XR11 to new (target) serving RAN node XR11; and control of user plane tunnels between old (source) serving RAN node XR11 to new (target) serving RAN node XR11. A protocol stack of the Xn-U may include a transport network layer built on Internet Protocol (IP) transport layer, and a GTP-U layer on top of a UDP and/or IP layer(s) to carry user plane PDUs. The Xn-C protocol stack may include an application layer signaling protocol (referred to as Xn Application Protocol (Xn-AP)) and a transport network layer that is built on an SCTP layer. The SCTP layer may be on top of an IP layer. The SCTP layer provides the guaranteed delivery of application layer messages. In the transport IP layer point-to-point transmission is used to deliver the signaling PDUs. In other implementations, the Xn-U protocol stack and/or the Xn-C protocol stack may be the same or similar to the user plane and/or control plane protocol stack(s) shown and described herein.

Fig. 8 shows an example of infrastructure equipment XS00 in accordance with various embodiments. The infrastructure equipment XS00 (or "system XS00") may be implemented as a base station, radio head, RAN node, etc., such as the RAN nodes XQ11 and XQ12, and/or AP XQ06 shown and described previously. In other examples, the system XS00 could be implemented in or by a UE, application server(s) XQ30, and/or any other element/device discussed herein. The system XS00 may include one or more of application circuitry XS05, baseband circuitry XS10, one or more radio front end modules XS15, memory XS20, power management integrated circuitry (PMIC) XS25, power tee circuitry XS30, network controller XS35, network interface connector XS40, satellite positioning circuitry XS45, and user interface XS50. In some embodiments, the device XT00 may include additional elements such as, for example, memory/storage, display, camera, sensor, or input/output (I/O) interface. In other embodiments, the components described below may be included in more than one device (e.g., said circuitries may be separately included in more than one device for Cloud-RAN (C-RAN) implementations).

As used herein, the term "circuitry" may refer to, is part of, or includes hardware components such as an electronic circuit, a logic circuit, a processor (shared, dedicated, or group) and/or memory (shared, dedicated, or group), an Application Specific Integrated Circuit (ASIC), a field-programmable device (FPD) (for example, a field-programmable gate array (FPGA), a programmable logic device (PLD), a complex PLD (CPLD), a high-capacity PLD (HCPLD), a structured ASIC, or a programmable System on Chip (SoC)), digital signal processors (DSPs), etc., that are configured to provide the described functionality. In some embodiments, the circuitry may execute one or more software or firmware programs to provide at least some of the described functionality. In addition, the term "circuitry" may also refer to a combination of one or more hardware elements (or a combination of circuits used in an electrical or electronic system) with the program code used to carry out the functionality of that program code. In these embodiments, the combination of hardware elements and program code may be referred to as a particular type of circuitry.

The terms "application circuitry" and/or "baseband circuitry" may be considered synonymous to, and may be referred to as "processor circuitry." As used herein, the term "processor circuitry" may refer to, is part of, or includes circuitry capable of sequentially and automatically carrying out a sequence of arithmetic or logical operations; and recording, storing, and/or transferring digital data. The term "processor circuitry" may refer to one or more application processors, one or more baseband processors, a physical central processing unit (CPU), a single-core processor, a dual-core processor, a triple-core processor, a quad-core processor, and/or any other device capable of executing or otherwise operating computerexecutable instructions, such as program code, software modules, and/or functional processes.

Furthermore, the various components of the core network XQ20 (or CN XR20 discussed previously) may be referred to as "network elements." The term "network element" may describe a physical or virtualized equipment used to provide wired or wireless communication network services. The term "network element" may be considered synonymous to and/or referred to as a networked computer, networking hardware, network equipment, network node, router, switch, hub, bridge, radio network controller, radio access network device, gateway, server, virtualized network function (VNF), network functions virtualization infrastructure (NFVI), and/or the like.

Application circuitry XS05 may include one or more central processing unit (CPU) cores and one or more of cache memory, low drop-out voltage regulators (LDOs), interrupt controllers, serial interfaces such as SPI, I2C or universal programmable serial interface module, real time clock (RTC), timer-counters including interval and watchdog timers, general purpose input/output (I/O or IO), memory card controllers such as Secure Digital (SD/)MultiMediaCard (MMC) or similar, Universal Serial Bus (USB) interfaces, Mobile Industry Processor Interface (MIPI) interfaces and Joint Test Access Group (JTAG) test access ports. As examples, the application circuitry XS05 may include one or more Intel Pentium®, Core®, or Xeon® processor(s); Advanced Micro Devices (AMD) Ryzen® processor(s), Accelerated Processing Units (APUs), or Epyc® processors; and/or the like. In some embodiments, the system XS00 may not utilize application circuitry XS05, and instead may include a special-purpose processor/controller to process IP data received from an EPC or 5GC, for example.

Additionally or alternatively, application circuitry XS05 may include circuitry such as, but not limited to, one or more field-programmable devices (FPDs) such as field-programmable gate arrays (FPGAs) and the like; programmable logic devices (PLDs) such as complex PLDs (CPLDs), high-capacity PLDs (HCPLDs), and the like; ASICs such as structured ASICs and the like; programmable SoCs (PSoCs); and the like. In such embodiments, the circuitry of application circuitry XS05 may comprise logic blocks or logic fabric including other interconnected resources that may be programmed to perform various functions, such as the procedures, methods, functions, etc. of the various embodiments discussed herein. In such embodiments, the circuitry of application circuitry XS05 may include memory cells (e.g., erasable programmable read-only memory (EPROM), electrically erasable programmable read-only memory (EEPROM), flash memory, static memory (e.g., static random access memory (SRAM), anti-fuses, etc.)) used to store logic blocks, logic fabric, data, etc. in lookup-tables (LUTs) and the like.

The baseband circuitry XS10 may be implemented, for example, as a solder-down substrate including one or more integrated circuits, a single packaged integrated circuit soldered to a main circuit board or a multi-chip module containing two or more integrated circuits. Although not shown, baseband circuitry XS10 may comprise one or more digital baseband systems, which may be coupled via an interconnect subsystem to a CPU subsystem, an audio subsystem, and an interface subsystem. The digital baseband subsystems may also be coupled to a digital baseband interface and a mixed-signal baseband sub-system via another interconnect subsystem. Each of the interconnect subsystems may include a bus system, point-to-point connections, network-on-chip (NOC) structures, and/or some other suitable bus or interconnect technology, such as those discussed herein. The audio sub-system may include digital signal processing circuitry, buffer memory, program memory, speech processing accelerator circuitry, data converter circuitry such as analog-to-digital and digital-to-analog converter circuitry, analog circuitry including one or more of amplifiers and filters, and/or other like components. In an aspect of the present disclosure, baseband circuitry XS10 may include protocol processing circuitry with one or more instances of control circuitry (not shown) to provide control functions for the digital baseband circuitry and/or radio frequency circuitry (for example, the radio front end modules XS15).

User interface circuitry XS50 may include one or more user interfaces designed to enable user interaction with the system XS00 or peripheral component interfaces designed to enable peripheral component interaction with the system XS00. User interfaces may include, but are not limited to, one or more physical or virtual buttons (e.g., a reset button), one or more indicators (e.g., light emitting diodes (LEDs)), a physical keyboard or keypad, a mouse, a touchpad, a touchscreen, speakers or other audio emitting devices, microphones, a printer, a scanner, a headset, a display screen or display device, etc. Peripheral component interfaces may include, but are not limited to, a non-volatile memory port, a universal serial bus (USB) port, an audio jack, a power supply interface, etc.

The radio front end modules (RFEMs) XS15 may comprise a millimeter wave RFEM and one or more sub-millimeter wave radio frequency integrated circuits (RFICs). In some implementations, the one or more sub-millimeter wave RFICs may be physically separated from the millimeter wave RFEM. The RFICs may include connections to one or more antennas or antenna arrays, and the RFEM may be connected to multiple antennas. In alternative implementations, both millimeter wave and sub-millimeter wave radio functions may be implemented in the same physical radio front end module XS15. The RFEMs XS15 may incorporate both millimeter wave antennas and sub-millimeter wave antennas.

The memory circuitry XS20 may include one or more of volatile memory including dynamic random access memory (DRAM) and/or synchronous dynamic random access memory (SDRAM), and nonvolatile memory (NVM) including high-speed electrically erasable memory (commonly referred to as Flash memory), phase change random access memory (PRAM), magnetoresistive random access memory (MRAM), etc., and may incorporate the three-dimensional (3D) cross-point (XPOINT) memories from Intel® and Micron®. Memory circuitry XS20 may be implemented as one or more of solder down packaged integrated circuits, socketed memory modules and plug-in memory cards.

The PMIC XS25 may include voltage regulators, surge protectors, power alarm detection circuitry, and one or more backup power sources such as a battery or capacitor. The power alarm detection circuitry may detect one or more of brown out (under-voltage) and surge (over-voltage) conditions. The power tee circuitry XS30 may provide for electrical power drawn from a network cable to provide both power supply and data connectivity to the infrastructure equipment XS00 using a single cable.

The network controller circuitry XS35 may provide connectivity to a network using a standard network interface protocol such as Ethernet, Ethernet over GRE Tunnels, Ethernet over Multiprotocol Label Switching (MPLS), or some other suitable protocol. Network connectivity may be provided to/from the infrastructure equipment XS00 via network interface connector XS40 using a physical connection, which may be electrical (commonly referred to as a "copper interconnect"), optical, or wireless. The network controller circuitry XS35 may include one or more dedicated processors and/or FPGAs to communicate using one or more of the aforementioned protocol. In some implementations, the network controller circuitry XS35 may include multiple controllers to provide connectivity to other networks using the same or different protocols.

The positioning circuitry XS45 may include circuitry to receive and decode signals transmitted by one or more navigation satellite constellations of a global navigation satellite system (GNSS). Examples of navigation satellite constellations (or GNSS) may include United States' Global Positioning System (GPS), Russia's Global Navigation System (GLONASS), the European Union's Galileo system, China's BeiDou Navigation Satellite System, a regional navigation system or GNSS augmentation system (e.g., Navigation with Indian Constellation (NAVIC), Japan's Quasi-Zenith Satellite System (QZSS), France's Doppler Orbitography and Radio-positioning Integrated by Satellite (DORIS), etc.), or the like. The positioning circuitry XS45 may comprise various hardware elements (e.g., including hardware devices such as switches, filters, amplifiers, antenna elements, and the like to facilitate the communications over-the-air (OTA) communications) to communicate with components of a positioning network, such as navigation satellite constellation nodes.

Nodes or satellites of the navigation satellite constellation(s) ("GNSS nodes") may provide positioning services by continuously transmitting or broadcasting GNSS signals along a line of sight, which may be used by GNSS receivers (e.g., positioning circuitry XS45 and/or positioning circuitry implemented by UEs XQ01, XQ02, or the like) to determine their GNSS position. The GNSS signals may include a pseudorandom code (e.g., a sequence of ones and zeros) that is known to the GNSS receiver and a message that includes a time of transmission (ToT) of a code epoch (e.g., a defined point in the pseudorandom code sequence) and the GNSS node position at the ToT. The GNSS receivers may monitor/measure the GNSS signals transmitted/broadcasted by a plurality of GNSS nodes (e.g., four or more satellites) and solve various equations to determine a corresponding GNSS position (e.g., a spatial coordinate). The GNSS receivers also implement clocks that are typically less stable and less precise than the atomic clocks of the GNSS nodes, and the GNSS receivers may use the measured GNSS signals to determine the GNSS receivers' deviation from true time (e.g., an offset of the GNSS receiver clock relative to the GNSS node time). In some embodiments, the positioning circuitry XS45 may include a Micro-Technology for Positioning, Navigation, and Timing (Micro-PNT) IC that uses a master timing clock to perform position tracking/estimation without GNSS assistance.

The GNSS receivers may measure the time of arrivals (ToAs) of the GNSS signals from the plurality of GNSS nodes according to its own clock. The GNSS receivers may determine time of flight (ToF) values for each received GNSS signal from the ToAs and the ToTs, and then may determine, from the ToFs, a three-dimensional (3D) position and clock deviation. The 3D position may then be converted into a latitude, longitude and altitude. The positioning circuitry XS45 may provide data to application circuitry XS05, which may include one or more of position data or time data. Application circuitry XS05 may use the time data to synchronize operations with other radio base stations (e.g., RAN nodes XQ11, XQ12, XR11 or the like).

The components shown by Fig. 8 XS may communicate with one another using interface circuitry. As used herein, the term "interface circuitry" may refer to, is part of, or includes circuitry providing for the exchange of information between two or more components or devices. The term "interface circuitry" may refer to one or more hardware interfaces, for example, buses, input/output (I/O) interfaces, peripheral component interfaces, network interface cards, and/or the like. Any suitable bus technology may be used in various implementations, which may include any number of technologies, including industry standard architecture (ISA), extended ISA (EISA), peripheral component interconnect (PCI), peripheral component interconnect extended (PCIx), PCI express (PCIe), or any number of other technologies. The bus may be a proprietary bus, for example, used in a SoC based system. Other bus systems may be included, such as an I2C interface, an SPI interface, point to point interfaces, and a power bus, among others.

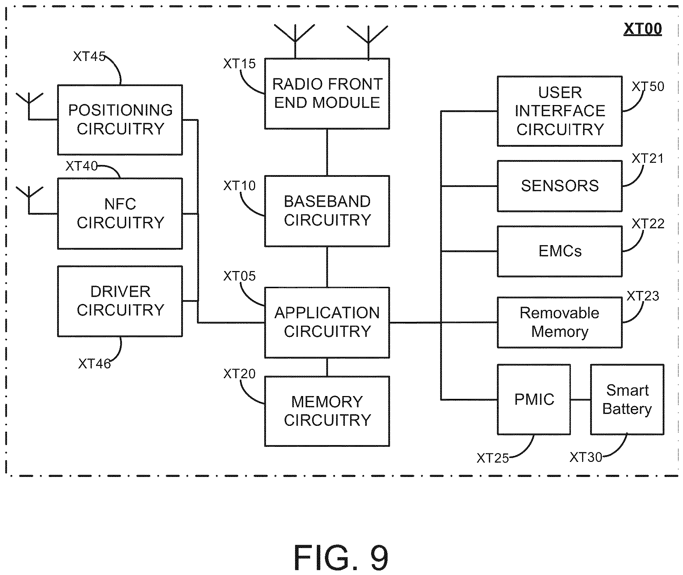

Fig. 9 illustrates an example of a platform XT00 (or "device XT00") in accordance with various embodiments. In embodiments, the computer platform XT00 may be suitable for use as UEs XQ01, XQ02, XR01, application servers XQ30, and/or any other element/device discussed herein. The platform XT00 may include any combinations of the components shown in the example. The components of platform XT00 may be implemented as integrated circuits (ICs), portions thereof, discrete electronic devices, or other modules, logic, hardware, software, firmware, or a combination thereof adapted in the computer platform XT00, or as components otherwise incorporated within a chassis of a larger system. The block diagram of Fig. 9 is intended to show a high level view of components of the computer platform XT00. However, some of the components shown may be omitted, additional components may be present, and different arrangement of the components shown may occur in other implementations.

The application circuitry XT05 may include circuitry such as, but not limited to single-core or multi-core processors and one or more of cache memory, low drop-out voltage regulators (LDOs), interrupt controllers, serial interfaces such as serial peripheral interface (SPI), interintegrated circuit (I2C) or universal programmable serial interface circuit, real time clock (RTC), timer-counters including interval and watchdog timers, general purpose input-output (IO), memory card controllers such as secure digital / multi-media card (SD/MMC) or similar, universal serial bus (USB) interfaces, mobile industry processor interface (MIPI) interfaces and Joint Test Access Group (JTAG) test access ports. The processor(s) may include any combination of general-purpose processors and/or dedicated processors (e.g., graphics processors, application processors, etc.). The processors (or cores) may be coupled with or may include memory/storage and may be configured to execute instructions stored in the memory/storage to enable various applications or operating systems to run on the platform XT00. In some embodiments, processors of application circuitry XS05/XT05 may process IP data packets received from an EPC or 5GC.

Application circuitry XT05 may be or may include a microprocessor, a multi-core processor, a multithreaded processor, an ultra-low voltage processor, an embedded processor, or other known processing element. In one example, the application circuitry XT05 may include an Intel® Architecture Core™ based processor, such as a Quark™, an Atom™, an i3, an i5, an i7, or an MCU-class processor, or another such processor available from Intel® Corporation, Santa Clara, CA. The processors of the application circuitry XT05 may also be one or more of Advanced Micro Devices (AMD) Ryzen® processor(s) or Accelerated Processing Units (APUs); A5-A9 processor(s) from Apple® Inc., Snapdragon™ processor(s) from Qualcomm® Technologies, Inc., Texas Instruments, Inc.® Open Multimedia Applications Platform (OMAP)™ processor(s); a MIPS-based design from MIPS Technologies, Inc.; an ARM-based design licensed from ARM Holdings, Ltd.; or the like. In some implementations, the application circuitry XT05 may be a part of a system on a chip (SoC) in which the application circuitry XT05 and other components are formed into a single integrated circuit, or a single package, such as the Edison™ or Galileo™ SoC boards from Intel® Corporation.

Additionally or alternatively, application circuitry XT05 may include circuitry such as, but not limited to, one or more field-programmable devices (FPDs) such as FPGAs and the like; programmable logic devices (PLDs) such as complex PLDs (CPLDs), high-capacity PLDs (HCPLDs), and the like; ASICs such as structured ASICs and the like; programmable SoCs (PSoCs); and the like. In such embodiments, the circuitry of application circuitry XT05 may comprise logic blocks or logic fabric including other interconnected resources that may be programmed to perform various functions, such as the procedures, methods, functions, etc. of the various embodiments discussed herein. In such embodiments, the circuitry of application circuitry XT05 may include memory cells (e.g., erasable programmable read-only memory (EPROM), electrically erasable programmable read-only memory (EEPROM), flash memory, static memory (e.g., static random access memory (SRAM), anti-fuses, etc.)) used to store logic blocks, logic fabric, data, etc. in lookup-tables (LUTs) and the like.

The baseband circuitry XT10 may be implemented, for example, as a solder-down substrate including one or more integrated circuits, a single packaged integrated circuit soldered to a main circuit board or a multi-chip module containing two or more integrated circuits. Although not shown, baseband circuitry XT10 may comprise one or more digital baseband systems, which may be coupled via an interconnect subsystem to a CPU subsystem, an audio subsystem, and an interface subsystem. The digital baseband subsystems may also be coupled to a digital baseband interface and a mixed-signal baseband sub-system via another interconnect subsystem. Each of the interconnect subsystems may include a bus system, point-to-point connections, network-on-chip (NOC) structures, and/or some other suitable bus or interconnect technology, such as those discussed herein. The audio sub-system may include digital signal processing circuitry, buffer memory, program memory, speech processing accelerator circuitry, data converter circuitry such as analog-to-digital and digital-to-analog converter circuitry, analog circuitry including one or more of amplifiers and filters, and/or other like components. In an aspect of the present disclosure, baseband circuitry XT10 may include protocol processing circuitry with one or more instances of control circuitry (not shown) to provide control functions for the digital baseband circuitry and/or radio frequency circuitry (for example, the radio front end modules XT15).

The radio front end modules (RFEMs) XT15 may comprise a millimeter wave RFEM and one or more sub-millimeter wave radio frequency integrated circuits (RFICs). In some implementations, the one or more sub-millimeter wave RFICs may be physically separated from the millimeter wave RFEM. The RFICs may include connections to one or more antennas or antenna arrays, and the RFEM may be connected to multiple antennas. In alternative implementations, both millimeter wave and sub-millimeter wave radio functions may be implemented in the same physical radio front end module XT15. The RFEMs XT15 may incorporate both millimeter wave antennas and sub-millimeter wave antennas.

The memory circuitry XT20 may include any number and type of memory devices used to provide for a given amount of system memory. As examples, the memory circuitry XT20 may include one or more of volatile memory including random access memory (RAM), dynamic RAM (DRAM) and/or synchronous dynamic RAM (SDRAM), and nonvolatile memory (NVM) including high-speed electrically erasable memory (commonly referred to as Flash memory), phase change random access memory (PRAM), magnetoresistive random access memory (MRAM), etc. The memory circuitry XT20 may be developed in accordance with a Joint Electron Devices Engineering Council (JEDEC) low power double data rate (LPDDR)-based design, such as LPDDR2, LPDDR3, LPDDR4, or the like. Memory circuitry XT20 may be implemented as one or more of solder down packaged integrated circuits, single die package (SDP), dual die package (DDP) or quad die package (Q17P), socketed memory modules, dual inline memory modules (DIMMs) including micro-DIMMs or Mini-DIMMs, and/or soldered onto a motherboard via a ball grid array (BGA). In low power implementations, the memory circuitry XT20 may be on-die memory or registers associated with the application circuitry XT05. To provide for persistent storage of information such as data, applications, operating systems and so forth, memory circuitry XT20 may include one or more mass storage devices, which may include, inter alia, a solid state disk drive (SSDD), hard disk drive (HDD), a micro HDD, resistance change memories, phase change memories, holographic memories, or chemical memories, among others. For example, the computer platform XT00 may incorporate the three-dimensional (3D) cross-point (XPOINT) memories from Intel® and Micron®.

Removable memory circuitry XT23 may include devices, circuitry, enclosures/housings, ports or receptacles, etc. used to coupled portable data storage devices with the platform XT00. These portable data storage devices may be used for mass storage purposes, and may include, for example, flash memory cards (e.g., Secure Digital (SD) cards, microSD cards, xD picture cards, and the like), and USB flash drives, optical discs, external HDDs, and the like.

The platform XT00 may also include interface circuitry (not shown) that is used to connect external devices with the platform XT00. The external devices connected to the platform XT00 via the interface circuitry may include sensors XT21, such as accelerometers, level sensors, flow sensors, temperature sensors, pressure sensors, barometric pressure sensors, and the like. The interface circuitry may be used to connect the platform XT00 to electromechanical components (EMCs) XT22, which may allow platform XT00 to change its state, position, and/or orientation, or move or control a mechanism or system. The EMCs XT22 may include one or more power switches, relays including electromechanical relays (EMRs) and/or solid state relays (SSRs), actuators (e.g., valve actuators, etc.), an audible sound generator, a visual warning device, motors (e.g., DC motors, stepper motors, etc.), wheels, thrusters, propellers, claws, clamps, hooks, and/or other like electro-mechanical components. In embodiments, platform XT00 may be configured to operate one or more EMCs XT22 based on one or more captured events and/or instructions or control signals received from a service provider and/or various clients.

In some implementations, the interface circuitry may connect the platform XT00 with positioning circuitry XT45, which may be the same or similar as the positioning circuitry XS45 discussed with regard to Fig. 8.

In some implementations, the interface circuitry may connect the platform XT00 with nearfield communication (NFC) circuitry XT40, which may include an NFC controller coupled with an antenna element and a processing device. The NFC circuitry XT40 may be configured to read electronic tags and/or connect with another NFC-enabled device.

The driver circuitry XT46 may include software and hardware elements that operate to control particular devices that are embedded in the platform XT00, attached to the platform XT00, or otherwise communicatively coupled with the platform XT00. The driver circuitry XT46 may include individual drivers allowing other components of the platform XT00 to interact or control various input/output (I/O) devices that may be present within, or connected to, the platform XT00. For example, driver circuitry XT46 may include a display driver to control and allow access to a display device, a touchscreen driver to control and allow access to a touchscreen interface of the platform XT00, sensor drivers to obtain sensor readings of sensors XT21 and control and allow access to sensors XT21, EMC drivers to obtain actuator positions of the EMCs XT22 and/or control and allow access to the EMCs XT22, a camera driver to control and allow access to an embedded image capture device, audio drivers to control and allow access to one or more audio devices.

The power management integrated circuitry (PMIC) XT25 (also referred to as "power management circuitry XT25") may manage power provided to various components of the platform XT00. In particular, with respect to the baseband circuitry XT10, the PMIC XT25 may control power-source selection, voltage scaling, battery charging, or DC-to-DC conversion. The PMIC XT25 may often be included when the platform XT00 is capable of being powered by a battery XT30, for example, when the device is included in a UE XQ01, XQ02, XR01.

In some embodiments, the PMIC XT25 may control, or otherwise be part of, various power saving mechanisms of the platform XT00. For example, if the platform XT00 is in an RRC_Connected state, where it is still connected to the RAN node as it expects to receive traffic shortly, then it may enter a state known as Discontinuous Reception Mode (DRX) after a period of inactivity. During this state, the platform XT00 may power down for brief intervals of time and thus save power. If there is no data traffic activity for an extended period of time, then the platform XT00 may transition off to an RRC_Idle state, where it disconnects from the network and does not perform operations such as channel quality feedback, handover, etc. The platform XT00 goes into a very low power state and it performs paging where again it periodically wakes up to listen to the network and then powers down again. The platform XT00 may not receive data in this state, in order to receive data, it must transition back to RRC_Connected state. An additional power saving mode may allow a device to be unavailable to the network for periods longer than a paging interval (ranging from seconds to a few hours). During this time, the device is totally unreachable to the network and may power down completely. Any data sent during this time incurs a large delay and it is assumed the delay is acceptable.

A battery XT30 may power the platform XT00, although in some examples the platform XT00 may be mounted deployed in a fixed location, and may have a power supply coupled to an electrical grid. The battery XT30 may be a lithium ion battery, a metal-air battery, such as a zinc-air battery, an aluminum-air battery, a lithium-air battery, and the like. In some implementations, such as in V2X applications, the battery XT30 may be a typical lead-acid automotive battery.

In some implementations, the battery XT30 may be a "smart battery," which includes or is coupled with a Battery Management System (BMS) or battery monitoring integrated circuitry. The BMS may be included in the platform XT00 to track the state of charge (SoCh) of the battery XT30. The BMS may be used to monitor other parameters of the battery XT30 to provide failure predictions, such as the state of health (SoH) and the state of function (SoF) of the battery XT30. The BMS may communicate the information of the battery XT30 to the application circuitry XT05 or other components of the platform XT00. The BMS may also include an analog-to-digital (ADC) convertor that allows the application circuitry XT05 to directly monitor the voltage of the battery XT30 or the current flow from the battery XT30. The battery parameters may be used to determine actions that the platform XT00 may perform, such as transmission frequency, network operation, sensing frequency, and the like.

A power block, or other power supply coupled to an electrical grid may be coupled with the BMS to charge the battery XT30. In some examples, the power block XQ28 may be replaced with a wireless power receiver to obtain the power wirelessly, for example, through a loop antenna in the computer platform XT00. In these examples, a wireless battery charging circuit may be included in the BMS. The specific charging circuits chosen may depend on the size of the battery XT30, and thus, the current required. The charging may be performed using the Airfuel standard promulgated by the Airfuel Alliance, the Qi wireless charging standard promulgated by the Wireless Power Consortium, or the Rezence charging standard, promulgated by the Alliance for Wireless Power, among others.

Although not shown, the components of platform XT00 may communicate with one another using a suitable bus technology, which may include any number of technologies, including industry standard architecture (ISA), extended ISA (EISA), peripheral component interconnect (PCI), peripheral component interconnect extended (PCIx), PCI express (PCIe), a Time-Trigger Protocol (TTP) system, or a FlexRay system, or any number of other technologies. The bus may be a proprietary bus, for example, used in a SoC based system. Other bus systems may be included, such as an I2C interface, an SPI interface, point to point interfaces, and a power bus, among others.

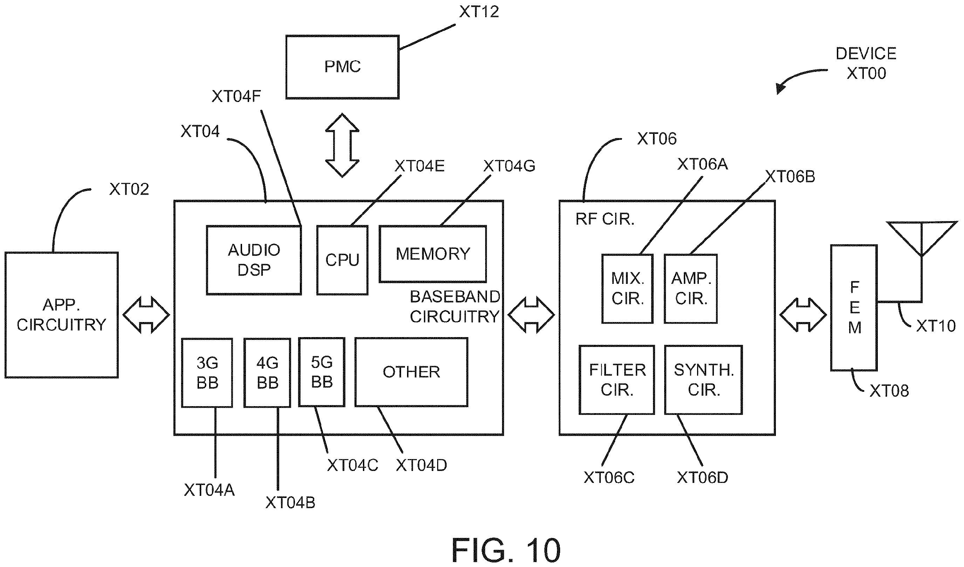

Fig. 10 illustrates example components of baseband circuitry XS10/XT10 and radio front end modules (RFEM) XS15/XT15 in accordance with some embodiments. As shown, the RFEM XS15/XT15 may include Radio Frequency (RF) circuitry XT06, front-end module (FEM) circuitry XT08, one or more antennas XT10 coupled together at least as shown.

The baseband circuitry XS10/XT10 may include circuitry such as, but not limited to, one or more single-core or multi-core processors. The baseband circuitry XS10/XT10 may include one or more baseband processors or control logic to process baseband signals received from a receive signal path of the RF circuitry XT06 and to generate baseband signals for a transmit signal path of the RF circuitry XT06. Baseband processing circuitry XS10/XT10 may interface with the application circuitry XS05/XT05 for generation and processing of the baseband signals and for controlling operations of the RF circuitry XT06. For example, in some embodiments, the baseband circuitry XS10/XT10 may include a third generation (3G) baseband processor XT04A, a fourth generation (4G) baseband processor XT04B, a fifth generation (5G) baseband processor XT04C, or other baseband processor(s) XT04D for other existing generations, generations in development or to be developed in the future (e.g., second generation (2G), sixth generation (6G), etc.). The baseband circuitry XS10/XT10 (e.g., one or more of baseband processors XT04A-D) may handle various radio control functions that enable communication with one or more radio networks via the RF circuitry XT06. In other embodiments, some or all of the functionality of baseband processors XT04A-D may be included in modules stored in the memory XT04G and executed via a Central Processing Unit (CPU) XT04E. The radio control functions may include, but are not limited to, signal modulation/demodulation, encoding/decoding, radio frequency shifting, etc. In some embodiments, modulation/demodulation circuitry of the baseband circuitry XS10/XT10 may include Fast-Fourier Transform (FFT), precoding, or constellation mapping/demapping functionality. In some embodiments, encoding/decoding circuitry of the baseband circuitry XS10/XT10 may include convolution, tail-biting convolution, turbo, Viterbi, or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry XS10/XT10 may include one or more audio digital signal processor(s) (DSP) XT04F. The audio DSP(s) XT04F may be include elements for compression/decompression and echo cancellation and may include other suitable processing elements in other embodiments. Components of the baseband circuitry may be suitably combined in a single chip, a single chipset, or disposed on a same circuit board in some embodiments. In some embodiments, some or all of the constituent components of the baseband circuitry XS10/XT10 and the application circuitry XS05/XT05 may be implemented together such as, for example, on a system on a chip (SoC).

In some embodiments, the baseband circuitry XS10/XT10 may provide for communication compatible with one or more radio technologies. For example, in some embodiments, the baseband circuitry XS10/XT10 may support communication with an evolved universal terrestrial radio access network (EUTRAN) or other wireless metropolitan area networks (WMAN), a wireless local area network (WLAN), a wireless personal area network (WPAN). Embodiments in which the baseband circuitry XS10/XT10 is configured to support radio communications of more than one wireless protocol may be referred to as multimode baseband circuitry.

RF circuitry XT06 may enable communication with wireless networks using modulated electromagnetic radiation through a non-solid medium. In various embodiments, the RF circuitry XT06 may include switches, filters, amplifiers, etc. to facilitate the communication with the wireless network. RF circuitry XT06 may include a receive signal path which may include circuitry to down-convert RF signals received from the FEM circuitry XT08 and provide baseband signals to the baseband circuitry XS10/XT10. RF circuitry XT06 may also include a transmit signal path which may include circuitry to up-convert baseband signals provided by the baseband circuitry XS10/XT10 and provide RF output signals to the FEM circuitry XT08 for transmission.

In some embodiments, the receive signal path of the RF circuitry XT06 may include mixer circuitry XT06a, amplifier circuitry XT06b and filter circuitry XT06c. In some embodiments, the transmit signal path of the RF circuitry XT06 may include filter circuitry XT06c and mixer circuitry XT06a. RF circuitry XT06 may also include synthesizer circuitry XT06d for synthesizing a frequency for use by the mixer circuitry XT06a of the receive signal path and the transmit signal path. In some embodiments, the mixer circuitry XT06a of the receive signal path may be configured to down-convert RF signals received from the FEM circuitry XT08 based on the synthesized frequency provided by synthesizer circuitry XT06d. The amplifier circuitry XT06b may be configured to amplify the down-converted signals and the filter circuitry XT06c may be a low-pass filter (LPF) or band-pass filter (BPF) configured to remove unwanted signals from the down-converted signals to generate output baseband signals. Output baseband signals may be provided to the baseband circuitry XS10/XT10 for further processing. In some embodiments, the output baseband signals may be zero-frequency baseband signals, although this is not a requirement. In some embodiments, mixer circuitry XT06a of the receive signal path may comprise passive mixers, although the scope of the embodiments is not limited in this respect.

In some embodiments, the mixer circuitry XT06a of the transmit signal path may be configured to up-convert input baseband signals based on the synthesized frequency provided by the synthesizer circuitry XT06d to generate RF output signals for the FEM circuitry XT08. The baseband signals may be provided by the baseband circuitry XS10/XT10 and may be filtered by filter circuitry XT06c.

In some embodiments, the mixer circuitry XT06a of the receive signal path and the mixer circuitry XT06a of the transmit signal path may include two or more mixers and may be arranged for quadrature downconversion and upconversion, respectively. In some embodiments, the mixer circuitry XT06a of the receive signal path and the mixer circuitry XT06a of the transmit signal path may include two or more mixers and may be arranged for image rejection (e.g., Hartley image rejection). In some embodiments, the mixer circuitry XT06a of the receive signal path and the mixer circuitry XT06a may be arranged for direct downconversion and direct upconversion, respectively. In some embodiments, the mixer circuitry XT06a of the receive signal path and the mixer circuitry XT06a of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry XT06 may include analog-to-digital converter (ADC) and digital-to-analog converter (DAC) circuitry and the baseband circuitry XS10/XT10 may include a digital baseband interface to communicate with the RF circuitry XT06.

In some dual-mode embodiments, a separate radio IC circuitry may be provided for processing signals for each spectrum, although the scope of the embodiments is not limited in this respect.

In some embodiments, the synthesizer circuitry XT06d may be a fractional-N synthesizer or a fractional N/N+1 synthesizer, although the scope of the embodiments is not limited in this respect as other types of frequency synthesizers may be suitable. For example, synthesizer circuitry XT06d may be a delta-sigma synthesizer, a frequency multiplier, or a synthesizer comprising a phase-locked loop with a frequency divider.

The synthesizer circuitry XT06d may be configured to synthesize an output frequency for use by the mixer circuitry XT06a of the RF circuitry XT06 based on a frequency input and a divider control input. In some embodiments, the synthesizer circuitry XT06d may be a fractional N/N+1 synthesizer.

In some embodiments, frequency input may be provided by a voltage controlled oscillator (VCO), although that is not a requirement. Divider control input may be provided by either the baseband circuitry XS10/XT10 or the applications processor XS05/XT05 depending on the desired output frequency. In some embodiments, a divider control input (e.g., N) may be determined from a look-up table based on a channel indicated by the applications processor XS05/XT05.

Synthesizer circuitry XT06d of the RF circuitry XT06 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry XT06d may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (fLO). In some embodiments, the RF circuitry XT06 may include an IQ/polar converter.

FEM circuitry XT08 may include a receive signal path which may include circuitry configured to operate on RF signals received from one or more antennas XT10, amplify the received signals and provide the amplified versions of the received signals to the RF circuitry XT06 for further processing. FEM circuitry XT08 may also include a transmit signal path which may include circuitry configured to amplify signals for transmission provided by the RF circuitry XT06 for transmission by one or more of the one or more antennas XT10. In various embodiments, the amplification through the transmit or receive signal paths may be done solely in the RF circuitry XT06, solely in the FEM XT08, or in both the RF circuitry XT06 and the FEM XT08.

In some embodiments, the FEM circuitry XT08 may include a TX/RX switch to switch between transmit mode and receive mode operation. The FEM circuitry may include a receive signal path and a transmit signal path. The receive signal path of the FEM circuitry may include an LNA to amplify received RF signals and provide the amplified received RF signals as an output (e.g., to the RF circuitry XT06). The transmit signal path of the FEM circuitry XT08 may include a power amplifier (PA) to amplify input RF signals (e.g., provided by RF circuitry XT06), and one or more filters to generate RF signals for subsequent transmission (e.g., by one or more of the one or more antennas XT10).

Processors of the application circuitry XS05/XT05 and processors of the baseband circuitry XS10/XT10 may be used to execute elements of one or more instances of a protocol stack. For example, processors of the baseband circuitry XS10/XT10, alone or in combination, may be used execute Layer 3, Layer 2, or Layer 1 functionality, while processors of the baseband circuitry XS10/XT10 may utilize data (e.g., packet data) received from these layers and further execute Layer 4 functionality (e.g., transmission communication protocol (TCP) and user datagram protocol (UDP) layers). As referred to herein, Layer 3 may comprise a radio resource control (RRC) layer, described in further detail below. As referred to herein, Layer 2 may comprise a medium access control (MAC) layer, a radio link control (RLC) layer, and a packet data convergence protocol (PDCP) layer, described in further detail below. As referred to herein, Layer 1 may comprise a physical (PHY) layer of a UE/RAN node, described in further detail below.

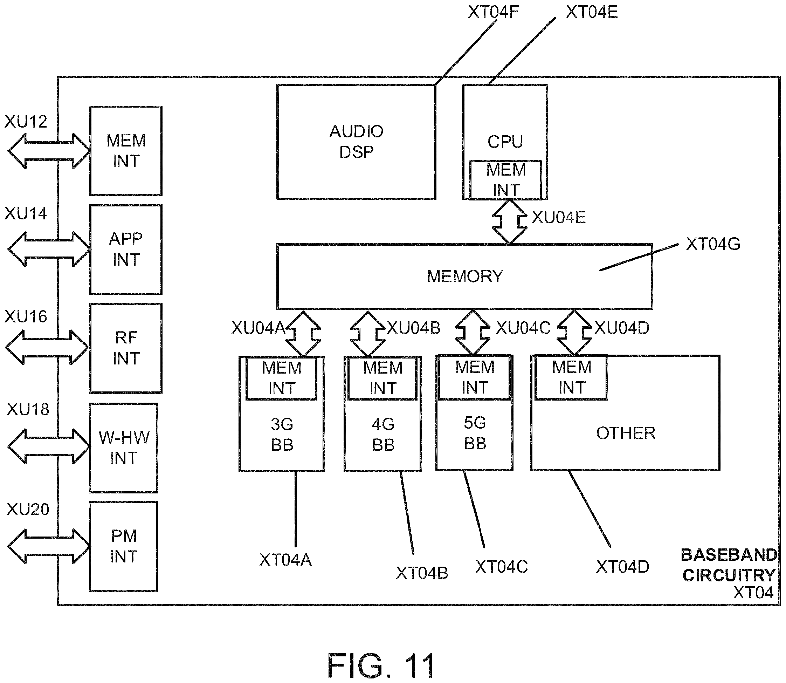

Fig. 11 illustrates example interfaces of baseband circuitry in accordance with some embodiments. As discussed above, the baseband circuitry XS10/XT10 of Figs. 8-10 may comprise processors XT04A-XT04E and a memory XT04G utilized by said processors. Each of the processors XT04A-XT04E may include a memory interface, XU04A-XU04E, respectively, to send/receive data to/from the memory XT04G.

The baseband circuitry XS10/XT10 may further include one or more interfaces to communicatively couple to other circuitries/devices, such as a memory interface XU12 (e.g., an interface to send/receive data to/from memory external to the baseband circuitry XS10/XT10), an application circuitry interface XU14 (e.g., an interface to send/receive data to/from the application circuitry XS05/XT05 of Figs. 8-10), an RF circuitry interface XU16 (e.g., an interface to send/receive data to/from RF circuitry XT06 of Fig. 10), a wireless hardware connectivity interface XU18 (e.g., an interface to send/receive data to/from Near Field Communication (NFC) components, Bluetooth® components (e.g., Bluetooth® Low Energy), Wi-Fi® components, and other communication components), and a power management interface XU20 (e.g., an interface to send/receive power or control signals to/from the PMIC XT25.

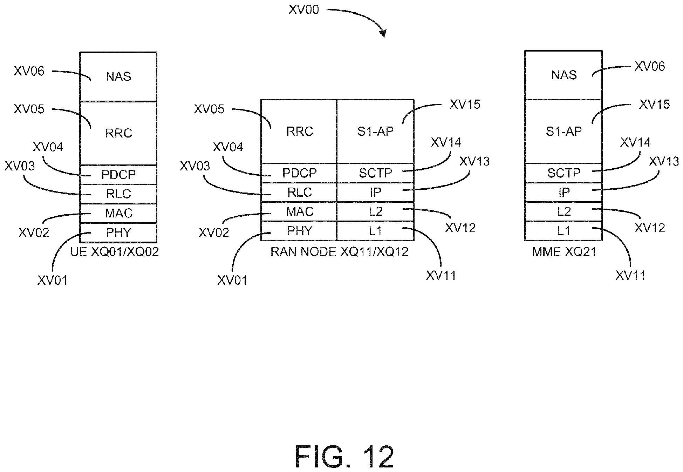

Fig. 12 is an illustration of a control plane protocol stack in accordance with some embodiments. In this embodiment, a control plane XV00 is shown as a communications protocol stack between the UE XQ01 (or alternatively, the UE XQ02), the RAN node XQ11 (or alternatively, the RAN node XQ12), and the MME XQ21.

The PHY layer XV01 may transmit or receive information used by the MAC layer XV02 over one or more air interfaces. The PHY layer XV01 may further perform link adaptation or adaptive modulation and coding (AMC), power control, cell search (e.g., for initial synchronization and handover purposes), and other measurements used by higher layers, such as the RRC layer XV05. The PHY layer XV01 may still further perform error detection on the transport channels, forward error correction (FEC) coding/decoding of the transport channels, modulation/demodulation of physical channels, interleaving, rate matching, mapping onto physical channels, and Multiple Input Multiple Output (MIMO) antenna processing.

The MAC layer XV02 may perform mapping between logical channels and transport channels, multiplexing of MAC service data units (SDUs) from one or more logical channels onto transport blocks (TB) to be delivered to PHY via transport channels, de-multiplexing MAC SDUs to one or more logical channels from transport blocks (TB) delivered from the PHY via transport channels, multiplexing MAC SDUs onto TBs, scheduling information reporting, error correction through hybrid automatic repeat request (HARQ), and logical channel prioritization.

The RLC layer XV03 may operate in a plurality of modes of operation, including: Transparent Mode (TM), Unacknowledged Mode (UM), and Acknowledged Mode (AM). The RLC layer XV03 may execute transfer of upper layer protocol data units (PDUs), error correction through automatic repeat request (ARQ) for AM data transfers, and concatenation, segmentation and reassembly of RLC SDUs for UM and AM data transfers. The RLC layer XV03 may also execute re-segmentation of RLC data PDUs for AM data transfers, reorder RLC data PDUs for UM and AM data transfers, detect duplicate data for UM and AM data transfers, discard RLC SDUs for UM and AM data transfers, detect protocol errors for AM data transfers, and perform RLC re-establishment.

The PDCP layer XV04 may execute header compression and decompression of IP data, maintain PDCP Sequence Numbers (SNs), perform in-sequence delivery of upper layer PDUs at re-establishment of lower layers, eliminate duplicates of lower layer SDUs at re-establishment of lower layers for radio bearers mapped on RLC AM, cipher and decipher control plane data, perform integrity protection and integrity verification of control plane data, control timer-based discard of data, and perform security operations (e.g., ciphering, deciphering, integrity protection, integrity verification, etc.).

The main services and functions of the RRC layer XV05 may include broadcast of system information (e.g., included in Master Information Blocks (MIBs) or System Information Blocks (SIBs) related to the non-access stratum (NAS)), broadcast of system information related to the access stratum (AS), paging, establishment, maintenance and release of an RRC connection between the UE and E-UTRAN (e.g., RRC connection paging, RRC connection establishment, RRC connection modification, and RRC connection release), establishment, configuration, maintenance and release of point to point Radio Bearers, security functions including key management, inter radio access technology (RAT) mobility, and measurement configuration for UE measurement reporting. Said MIBs and SIBs may comprise one or more information elements (IEs), which may each comprise individual data fields or data structures.

The UE XQ01 and the RAN node XQ11 may utilize a Uu interface (e.g., an LTE-Uu interface) to exchange control plane data via a protocol stack comprising the PHY layer XV01, the MAC layer XV02, the RLC layer XV03, the PDCP layer XV04, and the RRC layer XV05.

The non-access stratum (NAS) protocols XV06 form the highest stratum of the control plane between the UE XQ01 and the MME XQ21. The NAS protocols XV06 support the mobility of the UE XQ01 and the session management procedures to establish and maintain IP connectivity between the UE XQ01 and the P-GW XQ23.

The S1 Application Protocol (S1-AP) layer XV15 may support the functions of the S1 interface and comprise Elementary Procedures (EPs). An EP is a unit of interaction between the RAN node XQ11 and the CN XQ20. The S1-AP layer services may comprise two groups: UE-associated services and non UE-associated services. These services perform functions including, but not limited to: E-UTRAN Radio Access Bearer (E-RAB) management, UE capability indication, mobility, NAS signaling transport, RAN Information Management (RIM), and configuration transfer.

The Stream Control Transmission Protocol (SCTP) layer (alternatively referred to as the SCTP/IP layer) XV14 may ensure reliable delivery of signaling messages between the RAN node XQ11 and the MME XQ21 based, in part, on the IP protocol, supported by the IP layer XV13. The L2 layer XV12 and the L1 layer XV11 may refer to communication links (e.g., wired or wireless) used by the RAN node and the MME to exchange information.

The RAN node XQ11 and the MME XQ21 may utilize an S1-MME interface to exchange control plane data via a protocol stack comprising the L1 layer XV11, the L2 layer XV12, the IP layer XV13, the SCTP layer XV14, and the S1-AP layer XV15.

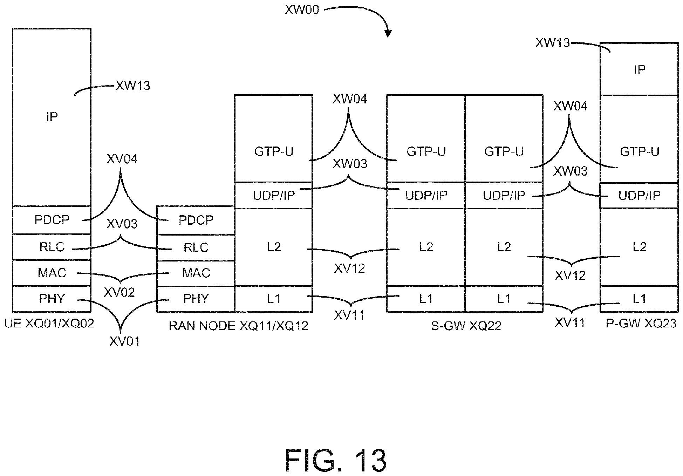

Fig. 13 is an illustration of a user plane protocol stack in accordance with some embodiments. In this embodiment, a user plane XW00 is shown as a communications protocol stack between the UE XQ01 (or alternatively, the UE XQ02), the RAN node XQ11 (or alternatively, the RAN node XQ12), the S-GW XQ22, and the P-GW XQ23. The user plane XW00 may utilize at least some of the same protocol layers as the control plane XV00. For example, the UE XQ01 and the RAN node XQ11 may utilize a Uu interface (e.g., an LTE-Uu interface) to exchange user plane data via a protocol stack comprising the PHY layer XV01, the MAC layer XV02, the RLC layer XV03, the PDCP layer XV04.

The General Packet Radio Service (GPRS) Tunneling Protocol for the user plane (GTP-U) layer XW04 may be used for carrying user data within the GPRS core network and between the radio access network and the core network. The user data transported can be packets in any of IPv4, IPv6, or PPP formats, for example. The UDP and IP security (UDP/IP) layer XW03 may provide checksums for data integrity, port numbers for addressing different functions at the source and destination, and encryption and authentication on the selected data flows. The RAN node XQ11 and the S-GW XQ22 may utilize an S1-U interface to exchange user plane data via a protocol stack comprising the L1 layer XV11, the L2 layer XV12, the UDP/IP layer XW03, and the GTP-U layer XW04. The S-GW XQ22 and the P-GW XQ23 may utilize an S5/S8a interface to exchange user plane data via a protocol stack comprising the L1 layer XV11, the L2 layer XV12, the UDP/IP layer XW03, and the GTP-U layer XW04. As discussed above with respect to Fig. 12, NAS protocols support the mobility of the UE XQ01 and the session management procedures to establish and maintain IP connectivity between the UE XQ01 and the P-GW XQ23.

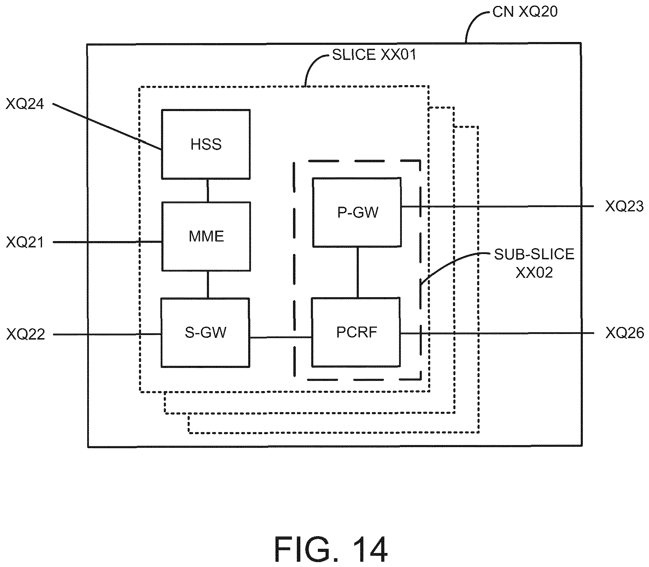

Fig. 14 illustrates components of a core network in accordance with some embodiments. The components of the CN XQ20 may be implemented in one physical node or separate physical nodes including components to read and execute instructions from a machine-readable or computer-readable medium (e.g., a non-transitory machine-readable storage medium). In embodiments, the components of CN XR20 may be implemented in a same or similar manner as discussed herein with regard to the components of CN XQ20. In some embodiments, Network Functions Virtualization (NFV) is utilized to virtualize any or all of the above described network node functions via executable instructions stored in one or more computer-readable storage mediums (described in further detail below). A logical instantiation of the CN XQ20 may be referred to as a network slice XX01, and individual logical instantiations of the CN XQ20 may provide specific network capabilities and network characteristics. A logical instantiation of a portion of the CN XQ20 may be referred to as a network sub-slice XX02 (e.g., the network sub-slice XX02 is shown to include the PGW XQ23 and the PCRF XQ26).

As used herein, the terms "instantiate", "instantiation", and the like may refer to the creation of an instance, and an "instance" may refer to a concrete occurrence of an object, which may occur, for example, during execution of program code. A network instance may refer to information identifying a domain, which may be used for traffic detection and routing in case of different IP domains or overlapping IP addresses. A network slice instance may refer to set of network functions (NFs) instances and the resources (e.g., compute, storage, and networking resources) required to deploy the network slice.

With respect to 5G systems (see e.g., Fig. 7), a network slice may include the CN control plane and user plane NFs, NG RANs in a serving PLMN, and a N3IWF functions in the serving PLMN. Individual network slices may have different Single Network Slice Selection Assistance Information (S-NSSAI) and/or may have different Slice/Service Types (SSTs). Network slices may differ for supported features and network functions optimizations, and/or multiple network slice instances may deliver the same service/features but for different groups of UEs (e.g., enterprise users). For example, individual network slices may deliver different committed service(s) and/or may be dedicated to a particular customer or enterprise. In this example, each network slice may have different S-NSSAIs with the same SST but with different slice differentiators. Additionally, a single UE may be served with one or more network slice instances simultaneously via a 5G access node (AN) and associated with eight different S-NSSAIs. Moreover, an AMF instance serving an individual UE may belong to each of the network slice instances serving that UE.

NFV architectures and infrastructures may be used to virtualize one or more NFs, alternatively performed by proprietary hardware, onto physical resources comprising a combination of industry-standard server hardware, storage hardware, or switches. In other words, NFV systems can be used to execute virtual or reconfigurable implementations of one or more EPC components/functions.

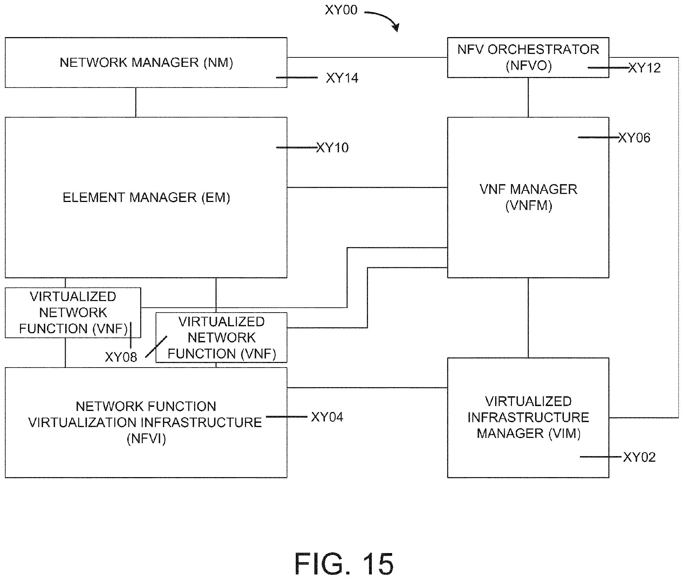

Fig. 15 is a block diagram illustrating components, according to some example embodiments, of a system XY00 to support NFV. The system XY00 is illustrated as including a virtualized infrastructure manager (VIM) XY02, a network function virtualization infrastructure (NFVI) XY04, a VNF manager (VNFM) XY06, virtualized network functions (VNFs) XY08, an element manager (EM) XY10, an NFV Orchestrator (NFVO) XY12, and a network manager (NM) XY14.

The VIM XY02 manages the resources of the NFVI XY04. The NFVI XY04 can include physical or virtual resources and applications (including hypervisors) used to execute the system XY00. The VIM XY02 may manage the life cycle of virtual resources with the NFVI XY04 (e.g., creation, maintenance, and tear down of virtual machines (VMs) associated with one or more physical resources), track VM instances, track performance, fault and security of VM instances and associated physical resources, and expose VM instances and associated physical resources to other management systems.

The VNFM XY06 may manage the VNFs XY08. The VNFs XY08 may be used to execute EPC components/functions. The VNFM XY06 may manage the life cycle of the VNFs XY08 and track performance, fault and security of the virtual aspects of VNFs XY08. The EM XY10 may track the performance, fault and security of the functional aspects of VNFs XY08. The tracking data from the VNFM XY06 and the EM XY10 may comprise, for example, performance measurement (PM) data used by the VIM XY02 or the NFVI XY04. Both the VNFM XY06 and the EM XY10 can scale up/down the quantity of VNFs of the system XY00.

The NFVO XY12 may coordinate, authorize, release and engage resources of the NFVI XY04 in order to provide the requested service (e.g., to execute an EPC function, component, or slice). The NM XY14 may provide a package of end-user functions with the responsibility for the management of a network, which may include network elements with VNFs, non-virtualized network functions, or both (management of the VNFs may occur via the EM XY10).

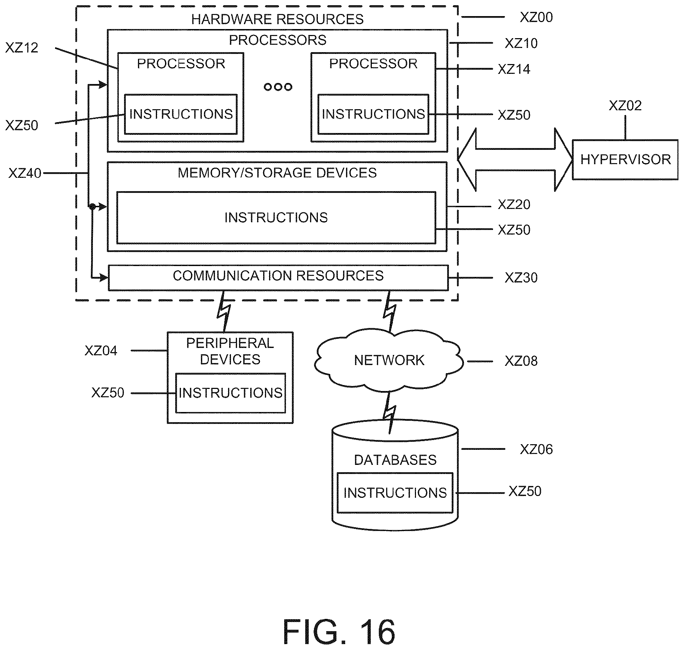

Fig. 15 is a block diagram illustrating components, according to some example embodiments, able to read instructions from a machine-readable or computer-readable medium (e.g., a non-transitory machine-readable storage medium) and perform any one or more of the methodologies discussed herein. Specifically, Fig. 16 shows a diagrammatic representation of hardware resources XZ00 including one or more processors (or processor cores) XZ10, one or more memory/storage devices XZ20, and one or more communication resources XZ30, each of which may be communicatively coupled via a bus XZ40. As used herein, the term "computing resource", "hardware resource", etc., may refer to a physical or virtual device, a physical or virtual component within a computing environment, and/or physical or virtual component within a particular device, such as computer devices, mechanical devices, memory space, processor/CPU time and/or processor/CPU usage, processor and accelerator loads, hardware time or usage, electrical power, input/output operations, ports or network sockets, channel/link allocation, throughput, memory usage, storage, network, database and applications, and/or the like. For embodiments where node virtualization (e.g., NFV) is utilized, a hypervisor XZ02 may be executed to provide an execution environment for one or more network slices/sub-slices to utilize the hardware resources XZ00. A "virtualized resource" may refer to compute, storage, and/or network resources provided by virtualization infrastructure to an application, device, system, etc.

The processors XZ10 (e.g., a central processing unit (CPU), a reduced instruction set computing (RISC) processor, a complex instruction set computing (CISC) processor, a graphics processing unit (GPU), a digital signal processor (DSP) such as a baseband processor, an application specific integrated circuit (ASIC), a radio-frequency integrated circuit (RFIC), another processor, or any suitable combination thereof) may include, for example, a processor XZ12 and a processor XZ14.

The memory/storage devices XZ20 may include main memory, disk storage, or any suitable combination thereof. The memory/storage devices XZ20 may include, but are not limited to any type of volatile or non-volatile memory such as dynamic random access memory (DRAM), static random-access memory (SRAM), erasable programmable read-only memory (EPROM), electrically erasable programmable read-only memory (EEPROM), Flash memory, solid-state storage, etc.

The communication resources XZ30 may include interconnection or network interface components or other suitable devices to communicate with one or more peripheral devices XZ04 or one or more databases XZ06 via a network XZ08. For example, the communication resources XZ30 may include wired communication components (e.g., for coupling via a Universal Serial Bus (USB)), cellular communication components, NFC components, Bluetooth® components (e.g., Bluetooth® Low Energy), Wi-Fi® components, and other communication components. As used herein, the term "network resource" or "communication resource" may refer to computing resources that are accessible by computer devices via a communications network. The term "system resources" may refer to any kind of shared entities to provide services, and may include computing and/or network resources. System resources may be considered as a set of coherent functions, network data objects or services, accessible through a server where such system resources reside on a single host or multiple hosts and are clearly identifiable.

Instructions XZ50 may comprise software, a program, an application, an applet, an app, or other executable code for causing at least any of the processors XZ10 to perform any one or more of the methodologies discussed herein. The instructions XZ50 may reside, completely or partially, within at least one of the processors XZ10 (e.g., within the processor's cache memory), the memory/storage devices XZ20, or any suitable combination thereof. Furthermore, any portion of the instructions XZ50 may be transferred to the hardware resources XZ00 from any combination of the peripheral devices XZ04 or the databases XZ06. Accordingly, the memory of processors XZ10, the memory/storage devices XZ20, the peripheral devices XZ04, and the databases XZ06 are examples of computer-readable and machine-readable media.

For one or more embodiments, at least one of the components set forth in one or more of the preceding figures may be configured to perform one or more operations, techniques, processes, and/or methods as set forth in the example section below. For example, the baseband circuitry as described above in connection with one or more of the preceding figures may be configured to operate in accordance with one or more of the examples set forth below. For another example, circuitry associated with a UE, base station, network element, etc. as described above in connection with one or more of the preceding figures may be configured to operate in accordance with one or more of the examples set forth below in the example section.

In some embodiments, the electronic device(s), network(s), system(s), chip(s) or component(s), or portions or implementations thereof, of any figure herein may be configured to perform one or more processes, techniques, or methods as described herein, or portions thereof. In some embodiments, the electronic device(s), network(s), system(s), chip(s) or component(s), or portions or implementations thereof, of any figure herein may be configured to perform according to any of the following examples, or portions thereof.

Examples may further be or relate to a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

The description and drawings merely illustrate the principles of the disclosure. Furthermore, all examples recited herein are principally intended expressly to be only for illustrative purposes to aid the reader in understanding the principles of the disclosure and the concepts contributed by the inventor(s) to furthering the art.

**Claims**

1. Baseband circuitry (10) configured to process baseband signals in a transceiver (100) of a mobile communication system (400), wherein the mobile communication system (400)is a new radio, NR, system or a 5th, 5G, or a later generation system, the baseband circuitry (10) comprising

   one or more interfaces (12) configured to communicate with radio frequency, RF, circuitry of the transceiver (100); and
   a processor (14) configured to communicate downlink control information, DCI, including frequency hopping information for a physical uplink shared channel, PUSCH, using the one or more interfaces (12), wherein the DCI indicates at least one frequency offset of a set of frequency hopping offset values configured by radio resource control, RRC, signaling, and wherein the frequency hopping information indicates intra-slot or inter-slot PUSCH frequency hopping.

2. The baseband circuitry (10) of claim 1, wherein the intra-slot or inter-slot PUSCH frequency hopping refers to intra-mini-slot or inter-mini-slot PUSCH frequency hopping.

3. The baseband circuitry (10) of claim 2, wherein an intra-mini-slot or an inter-mini-slot frequency hopping boundary within a slot for a total number of symbols N in an aggregated PUSCH transmission is the same as for intra-slot PUSCH frequency hopping for N- symbol PUSCH transmission.

4. The baseband circuitry (10) of one of the claims 1 to 3, wherein an intra-slot PUSCH frequency hopping boundary is derived according to Floor N/2, wherein N is a number of symbols in a PUSCH transmission.

5. The baseband circuitry (10) of any preceding claims, wherein there is a single hopping boundary within a slot.

6. The baseband circuitry (10) of claim 1, wherein the frequency hopping offset values are configured in terms of physical resource blocks, PRBs.

7. A transceiver (100) comprising the baseband circuitry (10) of any preceding claim.

8. User equipment (40), UE, comprising the transceiver (100) of claim 7.

9. An access node (30) of a mobile communication system (400) comprising the transceiver (100) of claim 7.

10. A method (60) for processing baseband signals in a transceiver (100) of a mobile communication system (400), wherein the mobile communication system (400) is a new radio, NR,system or a 5th, 5G, or a later generation system, the method (60) comprising communicating (62) with radio frequency, RF, circuitry of the transceiver (100); and communicating (64) downlink control information, DCI, including frequency hopping information for a physical uplink shared channel, PUSCH, wherein the DCI indicates at least one frequency offset of a set of frequency hopping offset values configured by radio resource control, RRC, signaling, and wherein the frequency hopping configuration indicates intra-slot or inter-slot PUSCH frequency hopping.

11. A computer program comprising instructions which, when the program is executed by a computer, a processor, or a programmable hardware component, cause the computer, processor or programmable hardware component to carry out the steps of the method of claim 10.

**Patentansprüche**

1. Basisbandschaltung (10), die konfiguriert ist, um Basisbandsignale in einem Sendeempfänger (100) eines Mobilkommunikationssystems (400) zu verarbeiten, wobei das Mobilkommunikationssystem (400) ein New Radio, NR, System oder ein fünftes-, 5G-, System oder ein System der späteren Generation ist, wobei die Basisbandschaltung (10) umfasst

   eine oder mehrere Schnittstellen (12), die konfiguriert sind, um mit einer Funkfrequenz-, RF-, Schaltung des Sendeempfängers (100) zu kommunizieren; und einen Prozessor (14), der konfiguriert ist, um Downlink-Steuerinformation, DCI, einschließlich Frequenzsprunginformation für einen gemeinsam genutzten physikalischen Uplink-Kanal, PUSCH, unter Verwendung der einen oder mehreren Schnittstellen (12) zu kommunizieren, wobei die DCI mindestens einen Frequenzversatz eines Satzes von Frequenzsprungversatzwerten angibt, die durch Funkressourcensteuerungs-, RRC-, Signalisierung konfiguriert sind, und
wobei die Frequenzsprunginformation Intra-Slot- oder Inter-Slot-PUSCH-Frequenzsprung angibt.

2. Basisbandschaltung (10) nach Anspruch 1, wobei sich das Intra-Slot- oder Inter-Slot-PUSCH-Frequenzsprung auf Intra-Mini-Slot- oder Inter-Mini-Slot-PUSCH-Frequenzsprung bezieht.

3. Basisbandschaltung (10) nach Anspruch 2, wobei eine Intra-Mini-Slot- oder eine Inter-Mini-Slot-Frequenzsprunggrenze innerhalb eines Slots für eine Gesamtzahl von Symbolen N in einer aggregierten PUSCH-Übertragung die gleiche ist wie für Intra-Slot-PUSCH-Frequenzsprung für N-Symbol-PUSCH-Übertragung.

4. Basisbandschaltung (10) nach einem der Ansprüche 1 bis 3, wobei eine Intra-Slot-PUSCH-Frequenzsprunggrenze gemäß Floor N/2 abgeleitet wird,
wobei N eine Anzahl von Symbolen in einer PUSCH-Übertragung ist.

5. Basisbandschaltung (10) nach einem der vorhergehenden Ansprüche, wobei es eine einzelne Sprunggrenze innerhalb eines Slots gibt.

6. Basisbandschaltung (10) nach Anspruch 1, wobei die Frequenzsprungversatzwerte in Form von physikalischen Ressourcenblöcken, PRBs, konfiguriert sind.

7. Sendeempfänger (100), umfassend die Basisbandschaltung (10) nach einem der vorhergehenden Ansprüche.

8. Benutzergerät (40), UE, umfassend den Sendeempfänger (100) nach Anspruch 7.

9. Zugangsknoten (30) eines Mobilkommunikationssystems (400), umfassend den Sendeempfänger (100) nach Anspruch 7.

10. Verfahren (60) zum Verarbeiten von Basisbandsignalen in einem Sendeempfänger (100) eines Mobilkommunikationssystems (400), wobei das Mobilkommunikationssystem (400) ein New Radio, NR, System oder ein fünftes-, 5G-, System oder ein System der späteren Generation ist, wobei das Verfahren (60) das Kommunizieren (62) mit einer Funkfrequenz-, RF-, Schaltung des Sendeempfängers (100) umfasst; und

Kommunizieren (64) von Downlink-Steuerinformation, DCI, einschließlich Frequenzsprunginformation für einen gemeinsam genutzten physikalischen Uplink-Kanal, PUSCH, wobei die DCI mindestens einen Frequenzversatz eines Satzes von Frequenzsprungversatzwerten angibt, die durch Funkressourcensteuerungs-, RRC-, Signalisierung konfiguriert sind, und
wobei die Frequenzsprungkonfiguration Intra-Slot- oder Inter-Slot-PUSCH-Frequenzsprung angibt.

11. Computerprogramm, umfassend Anweisungen, die, wenn das Programm von einem Computer, einem Prozessor oder einer programmierbaren Hardwarekomponente ausgeführt wird, den Computer, Prozessor oder die programmierbare Hardwarekomponente veranlassen, die Schritte des Verfahrens nach Anspruch 10 auszuführen.

**Revendications**

1. Une circuiterie de bande de base (10) configurée pour traiter des signaux de bande de base dans un émetteur/récepteur (100) d'un système de communication mobile (400), le système de communication mobile (400) étant un système Nouvelle radio, NR, ou un système de cinquième génération, 5G, ou de génération ultérieure, la circuiterie de bande de base (10) comprenant :

une ou plusieurs interfaces (12) configurées pour communiquer avec une circuiterie radiofréquence, RF, de l'émetteur/récepteur (100) ; et
un processeur (14) configuré pour communiquer des informations de contrôle de liaison descendante, DCI, comprenant des informations de saut de fréquence pour un canal partagé de liaison montante physique, PUSCH, en utilisant les une ou plusieurs interfaces (12), les DCI indiquant au moins un décalage de fréquence d'un ensemble de valeurs de décalage de saut de fréquence configuré par une signalisation de contrôle de ressource radio, RRC, et les informations de saut de fréquence indiquant des sauts de fréquence PUSCH intra-slot ou inter-slot.

2. La circuiterie de bande de base (10) de la revendication 1, dans laquelle les sauts de fréquence PUSCH intra-slot ou inter-slot renvoient à des sauts de fréquence PUSCH intra-minislot ou inter-minislot.

3. La circuiterie de bande de base (10) de la revendication 2, dans laquelle une frontière de saut de fréquence intra-minislot ou inter-minislot à l'intérieur d'un slot pour un nombre total N de symboles dans une transmission PUSCH agrégée est la même que pour un saut de fréquence PUSCH intra-slot pour une transmission PUSCH sur N symboles.

4. Le circuit de bande de base (10) de l'une des revendications 1 à 3, dans lequel une frontière de saut de fréquence PUSCH intra-slot est dérivée à partir de la partie entière de N/2, N étant le nombre de symboles dans une transmission PUSCH.

5. La circuiterie de bande de base (10) de l'une des revendications précédentes, dans laquelle il n'y a qu'une seule frontière de saut de fréquence à l'intérieur d'un slot.

6. La circuiterie de bande de base (10) de la revendication 1, dans laquelle les valeurs de décalage de saut de fréquence sont configurées en termes de blocs de ressource physique, PRB.

7. Un émetteur/récepteur (100), comprenant la circuiterie de bande de base (10) de l'une des revendications précédentes.

8. Un équipement utilisateur (40), UE, comprenant l'émetteur/récepteur (100) de la revendication 7.

9. Un nœud d'accès (30) d'un système de communication mobile (400), comprenant l'émetteur/récepteur (100) de la revendication 7.

10. Un procédé (60) de traitement de signaux de bande de base dans un émetteur/récepteur (100) d'un système de communication mobile (400), le système de communication mobile (400) étant un système Nouvelle radio, NR, ou un système de cinquième génération, 5G, ou de génération ultérieure, le procédé (60) comprenant :

la communication (62) avec une circuiterie radiofréquence, RF, de l'émetteur/récepteur (100) ; et
la communication (64) d'informations de contrôle de liaison descendante, DCI, comprenant des informations de saut de fréquence pour un canal partagé de liaison montante physique, PUSCH, les DCI indiquant au moins un décalage de fréquence d'un ensemble de valeurs de décalage de saut de fréquence configuré par une signalisation de contrôle de ressource radio, RRC, et les informations de saut de fréquence indiquant des sauts de fréquence PUSCH intra-slot ou inter-slot.

11. Un programme informatique comprenant des instructions qui, lorsque le programme est exécuté par un calculateur, un processeur, ou un composant matériel programmable, font en sorte que le calculateur, le processeur, ou le composant matériel programmable exécutent les étapes du procédé de la revendication 10.

FIG. 1

Frequency hopping information

30

400

40

50

FIG. 2

communicating with radio frequency, RF, circuitry of the transceiver

62

communicating frequency hopping information, wherein the frequency hopping information indicates a frequency hopping configuration of a physical uplink shared channel, PUSCH, wherein the frequency hopping configuration indicates intra-slot or inter-slot PUSCH frequency hopping

64

60

# FIG. 3

FIG. 4

Symbols  1  2  3...                                    14        1  2  3...                                    14

Mini-slot crossing the                                          Mini-slot repetitions crossing the
hopping boundary                                                hopping boundary

slot                                                            slot

Intra-slot hopping
boundary

FIG. 5

FIG. 6

FIG. 7

FIG. 8

FIG. 9

FIG. 10

FIG. 11

EP 3 462 795 B1

FIG. 12

FIG. 13

FIG. 14

XY00

NETWORK MANAGER (NM)

XY14

NFV ORCHESTRATOR
(NFVO)

XY12

ELEMENT MANAGER (EM)

XY10

VNF MANAGER
(VNFM)

XY06

VIRTUALIZED
NETWORK
FUNCTION (VNF)

XY08

VIRTUALIZED
NETWORK
FUNCTION (VNF)

NETWORK FUNCTION
VIRTUALIZATION INFRASTRUCTURE
(NFVI)

XY04

VIRTUALIZED
INFRASTRUCTURE
MANAGER (VIM)

XY02

FIG. 15

FIG. 16